# EUROPÄISCHE PATENTSCHRIFT

(11) **EP 3 158 111 B1**
(45) Veröffentlichungstag und Bekanntmachung des Hinweises auf die Patenterteilung: **29.07.2020**
(21) Anmeldenummer: 15744473.8
(22) Anmeldetag: 04.06.2015
(51) Int. Cl.: C25B 15/02, C25B 15/08, C25B 1/00, C25B 1/12, C25B 9/08

(54) **ELEKTROLYSEVERFAHREN UND ELEKTROLYSEANORDNUNG MIT REZIRKULIERENDEN SPÜLMEDIEN**
ELECTROLYSIS METHOD AND ELECTROLYSIS SYSTEM COMPRISING RECIRCULATING FLUSHING MEDIA
PROCÉDÉ D'ÉLECTROLYSE ET SYSTÈME D'ÉLECTROLYSE À FLUIDES DE BALAYAGE REMIS EN CIRCULATION

(30) Priorität: 06.06.2014 DE 102014108085
(43) Veröffentlichungstag der Anmeldung: 26.04.2017
(73) Patentinhaber: SunFire GmbH, 01237 Dresden (DE)
(72) Erfinder: VON OLSHAUSEN, Christian, 01324 Dresden (DE); BRABANDT, Jörg, 01277 Dresden (DE); SCHAARMANN, Dirk, 01109 Dresden (DE)
(74) Vertreter: Hansen, Jochen
(86) Internationale Anmeldenummer: PCT/DE2015/100223
(87) Internationale Veröffentlichungsnummer: WO 2015/185039

(56) Entgegenhaltungen:
- DE-A1- 2 549 471
- US-A1- 2012 325 654

## Beschreibung

Die Erfindung betrifft Elektrolyseverfahren mit einer Elektrolysezelle. Ferner betrifft die Erfindung eine Elektrolyseanordnung.

Zur Umwandlung elektrischer in chemische Energie gilt derzeit die Elektrolyse als nutzbarer Prozess für großtechnische Anwendungen. Die Elektrolyse ist ein Prozess, bei dem ein elektrischer Strom eine Redoxreaktion erzwingt. Da bei der Elektrolyse ein Teil der verwendeten elektrischen Energie in chemische Energie umgesetzt wird, können Elektrolysen zur Energiespeicherung in den Elektrolyseprodukten verwendet werden. Bei der Wasserelektrolyse wird Wasser zu Wasserstoff an der Kathode und Sauerstoff an der Anode der Elektrolysezelle zerlegt.

2 H₂O (l/g) → 2 H₂ (g) + O₂ (g)

Bei der Elektrolyse von Kohlendioxid entstehen Kohlenmonoxid an der Kathode und Sauerstoff an der Anode der Elektrolysezelle.

2 CO₂ (g) → 2 CO (g) + O₂ (g)

Grundlegend kann die Elektrolyse bei niedrigen Temperaturen unter Verwendung eines sauren, eines alkalischen oder eines PEM (proton exchange membrane)-Elektrolyseurs oder bei hohen Temperaturen unter Verwendung von oxidkeramischen Elektrolyten (SOEC - solid oxide electrolyser cell) ablaufen. Da die Hochtemperaturelektrolyse (HTEL) zur Erzeugung von Wasserstoff nicht mit flüssigem Wasser, sondern mit Wasserdampf gespeist wird, muss in der Hochtemperaturelektrolyse im Vergleich zu bei Normaltemperatur ablaufenden Elektrolysen ein geringerer Energieaufwand eingesetzt werden. Das liegt daran, dass die Spaltungsenergie von Wasserdampf ca. 16 % niedriger als die notwendige Spaltungsenergie von flüssigem Wasser ist. Der Unterschied entspricht der Verdampfungsenthalpie von Wasser. Die Wasserdampferzeugung ist aufgrund der Nutzung von Abwärme exothermer Folgeprozesse neutral gegenüber dem elektrischen Wirkungsgrad der Elektrolyse. Da die Elektroenergiekosten die gesamten Elektrolysekosten dominieren, birgt die Hochtemperaturelektrolyse einen signifikanten ökonomischen Vorteil.

Aus dem **Stand der Technik** ist beispielsweise aus der Druckschrift DE 25 49 471 A1 ein Hochtemperaturelektrolyseverfahren bekannt, bei dem der anodenseitig in den Elektrolysezellen gebildete Sauerstoff mittels eines Wasserdampfstromes oder eines anderen, gegenüber den verwendeten Materialien inerten Gasstromes verdünnt wird. Der mit dem Wasserdampfstrom von der Anode abgeführte Sauerstoff wird nach Auskondensation des begleitenden Wasserdampfes freigesetzt. Diese Vorgehensweise bewirkt eine Reduzierung des Sauerstoffpartialdruckes auf der Anodenseite der Elektrolysezellen, welche aus thermodynamischen Gründen zu einer Verringerung der erforderlichen Elektrolysespannung führt, was mit einer Verbesserung des Wirkungsgrades einhergeht. Zudem hat die vorgeschlagene Verfahrensweise eine Verminderung von Oxidations- und Korrosionsproblemen an der Anodenseite zur Folge.

### Probleme im Stand der Technik

Im Kontext eines Gesamtprozesses mit dem Ziel der Herstellung von synthetischen Gasen oder flüssigen Kraftstoffen spielt der Betrieb der Elektrolyse unter erhöhtem Druck eine entscheidende Rolle. Die im Anschluss an die Elektrolyse stattfindenden Konvertierungs- und Synthesestufen werden üblicherweise bei überatmosphärischen Drücken betrieben. Um ein sehr energieaufwändiges und somit teures Verdichten zwischen Elektrolyse und den Folgeprozessen einzusparen, sollte die Hochtemperaturelektrolyse bereits druckaufgeladen ablaufen. Der für die Hochtemperaturelektrolyse von Wasser notwendige Wasserdampf und/oder auch das für die Hochtemperaturelektrolyse verwendete Kohlendioxid kann hierfür bereits unter erhöhtem Ausgangsdruck bereitgestellt werden. Mit diesem Konzept müssen lediglich der Wasserdampf und/oder das Kohlendioxid auf den Prozessdruck komprimiert werden. Dies ist energetisch deutlich günstiger als eine Kompression von Wasserstoff oder Kohlenmonoxid nach der Elektrolysestufe.

Um die oben beschriebenen Anforderungen an den Druck zu erfüllen, wäre es bei dem bekannten Verfahren notwendig, das verwendete, immer wieder neu der Anode zuzuführende Spülgas auf das Druckniveau der Hochtemperaturelektrolyezelle zu bringen, da durch eventuelle Druckunterschiede Schäden im Elektrolysemodul verursacht werden können. Die notwendige Kompression hängt dabei von der Medienauswahl ab und geht zu Lasten des Gesamtwirkungsgrades des Elektrolysesystems. Gasförmige Medien, wie der in der Druckschrift DE 25 49 471 A1 vorgeschlagene Wasserdampf, besitzen eine hohe Kompressibilität und erfordern somit eine relativ hohe Verdichterleistung.

Darüber hinaus ist bezüglich der in der Druckschrift DE 25 49 471 A1 beschriebenen Verfahrensweise zu beachten, dass für die vorgesehene Spülung mit Wasserdampf eine vorherige Verdampfung von Wasser erforderlich ist, was den Gesamtwirkungsgrad des Elektrolyseverfahrens herabsetzt. Zudem muss in dem Verfahren der Druckschrift DE 25 49 471 A1 das extern zugeführte Wasser vorab aufbereitet werden.

Des Weiteren muss bei dem bekannten Verfahren das Spülgas in den Temperaturbereich der Hochtemperaturelektrolyse, also auf eine Temperatur zwischen 800 und 900°C, gebracht werden, da sonst zu hohe thermomechanische Belastungen und Leitfähigkeitseinbußen im Elektrolysemodul auftreten. Für die Temperierung des Spülgases ist somit zusätzliche Energie notwendig, welche den Gesamtwirkungsgrad herabsetzt. In dem Verfahren der Druckschrift DE 25 49 471 A1 wird versucht, dies zu kompensieren, indem vor Freisetzung des von der Anode abgeführten Sauerstoffes eine Übertragung von dessen Wärmeinhalt auf den Speisedampf erfolgt. Dies kann mittels eines Wärmetauschers realisiert werden, womit jedoch höhere Investitionskosten verbunden sind.

Bei der Nutzung von Spülgas in dem System der Druckschrift DE 25 49 471 A1 müssen auch die Medienkosten beachtet werden. Die notwendigen Spülgasmengen sind zwar in dieser Druckschrift nicht aufgeführt, jedoch ist ein kontinuierlicher Medienverbrauch während der Elektrolyse zu erwarten. Die daraus entstehenden Kosten vermindern die Wirtschaftlichkeit einer Hochtemperaturelektrolyse.

Aus der US 2012/325654 ist bekannt, dass ein Hochtemperaturmodul zur Elektrolyse von Wasser mit verbesserter Betriebssicherheit, bei dem in jeder Kathode und in jeder Anode gleichzeitig Dampf mit höchstens 1% Wasserstoff als Drainagegas eines Zellenstapels strömen kann. Der Zellenstapel ist in einem versiegelten Gehäuse untergebracht und ein Mechanismus zum Festklemmen durch Zusammendrücken des Stapels ist enthalten. Das Risiko von Undichtigkeiten, die zu einer Beeinträchtigung des Wirkungsgrades und zu einem Bruch des gesamten oder eines Teils des EHT-Elektrolyseurs eines Stapels führen können, wird verringert, während ein hoher Wirkungsgrad bereitgestellt wird, da durch Komprimieren des Stapels eine zufriedenstellende elektrische Leitung aufrechterhalten wird.

Der vorliegenden Erfindung liegt die **Aufgabe** zugrunde, ein Elektrolyseverfahren sowie eine Elektrolyseanordnung aufzuzeigen, die einen wirtschaftlicheren Betrieb einer Elektrolysezellenanordnung ermöglichen als es bisher im Stand der Technik möglich ist.

**Gelöst** wird diese Aufgabe mit einem Elektrolyseverfahren gemäß Hauptanspruch. Ferner wird die Aufgabe gelöst mit einer Elektrolyseanordnung gemäß nebengeordnetem Anspruch.

Ferner hat sich gezeigt, dass es zur Leistungserhöhung der durchgeführten Elektrolyse günstig ist, an der an der Anodenseite einer Elektrolysezelle befindlichen Elektrode eine Spülung vorzunehmen, um den dort gebildeten Sauerstoff abzuführen. Unter einer Spülung wird vorliegend eine zusätzliche Zufuhr von Gasen und/oder anderen Medien verstanden, um die im gespülten Bereich befindlichen oder dort gebildeten Gase und/oder Medien zu verdünnen und abzutransportieren.

Das Elektrolyseverfahren mit einer Elektrolysezelle, betrieben in einem Temperaturbereich von 300 °C bis 1.500 °C oder von 600°C bis 1.000°C, umfasst die Schritte:
- Zuführen eines Reaktanten zur Elektrolysezelle,
   wobei sich an der Kathode der Elektrolysezelle ein Produktgas und an der Anode der Elektrolysezelle Sauerstoff bildet,
- wenigstens teilweises Abtransportieren des Sauerstoffs mittels wenigstens eines der Elektrolysezelle zuzuführenden ersten Spülmediums, wobei das wenigstens erste Spülmedium inert gegenüber dem Sauerstoff ist,
- wenigstens teilweises Trennen des Spülmedium-Sauerstoffgemisches in einer Abtrennvorrichtung in die Bestandteile Sauerstoff und wenigstens das erste Spülmedium,
- Rezirkulieren durch erneutes Zuführen des abgetrennten wenigstens ersten Spülmediums in die Elektrolysezelle und Herausleiten des abgetrennten Sauerstoffs aus dem Verfahren,
wobei
das Verfahren auf einer Festoxidelektrolysezelle, einer Festoxidzelle, oder eine reversible Festoxidzelle als Elektrolysezelle gefahren wird
und
zum Spülen als das wenigstens erste Spülmedium ein Inertgas oder ein Edelgas bei Arbeitstemperatur und Arbeitsdruck der Elektrolyse verwendet wird, wobei dies in einem geschlossenen Anodenkreislauf geleitet wird,
wobei das wenigstens teilweise Trennen des Sauerstoffs vom ersten Spülmedium mit wenigstens einer Abtrennmembran und/oder einer porösen Abtrennstruktur und/oder einem Sorbens und/oder Druck- und/oder Temperaturwechselabsorptionsanordnung erfolgt.

Wenn im folgenden Merkmale des Verfahrens des Anspruchs 1 in "und/oder" Verknüpfungen angegeben werden, bedeutet das dennoch, das die Merkmale des Anspruchs 1 obligatorisch sind.

Bei dem erfindungsgemäßen Elektrolyseverfahren wird das Kathoden- und/oder das Anodenspülmedium im Kreislauf geführt, also nach erfolgter Spülung der Kathode und/oder der Anode erneut bzw. weiter verwendet. Dadurch ergibt sich neben den vorteilhaften Wirkungen der Spülung der jeweiligen Elektrode, nämlich der Verringerung von Leistungsverlusten und der Verringerung von ungewollten chemischen Reaktion an der jeweils gespülten Elektrode, eine deutliche Verbesserung des Gesamtwirkungsgrades des erfindungsgemäßen Verfahrens im Vergleich zum Stand der Technik. So kann durch die Kreislaufführung des jeweiligen Spülmediums dessen ursprüngliche thermische Energie und dessen Druck nahezu verlustfrei weiter genutzt werden. Zudem kann durch die Kreislaufführung des jeweiligen Spülmediums eine kontinuierliche Spülung der jeweiligen Elektrode gewährleistet werden. Dadurch können beispielsweise für die jeweilige Elektrode ansonsten nachteilhafte, beispielsweise zur Korrosion oder Oxidation der Elektrode führende Gase und/oder Medien von der gespülten Elektrode kontinuierlich abtransportiert werden, wodurch die Lebensdauer der wenigstens einen, gespülten Elektrolysezelle erhöht und Wartungs- und Investitionskosten verringert werden können.

Es kann ein wenigstens teilweises Abtransportieren des Produktgases durch Spülen mittels wenigstens eines zweiten Spülmediums erfolgen und das Spülmedium-Produktgasgemisch in einer Abtrennvorrichtung in die Bestandteile Produktgas und wenigstens das zweite Spülmedium aufgetrennt werden, wobei ein Rezirkulieren des abgetrennten wenigstens zweiten Spülmediums oder Spülmedium-Produktgasgemisch oder des Produktgases durch erneutes Zuführen in die Elektrolysezelle und ein wenigstens teilweises Herausleiten des abgetrennten Produktgases aus dem Verfahren erfolgt, wobei das wenigstens zweite Spülmedium inert gegenüber dem Produktgas ist.

Das Elektrolyseverfahren kann an wenigstens einer Elektrolysezelle betrieben werden, wobei aus Reaktantdampf und/oder Reaktantgas an einer Kathode der Elektrolysezelle Produktgas in Form von Wasserstoff und/oder Kohlenmonoxid und an einer Anode der Elektrolysezelle Sauerstoff gebildet wird, und der Kathode ein Kathodenspülmedium für einen zumindest teilweisen Abtransport des Wasserstoffs und/oder des Kohlenmonoxids von der Kathode und/oder der Anode ein Anodenspülmedium für einen zumindest teilweisen Abtransport des Sauerstoffs von der Anode zugeführt wird; und wobei dann, wenn die Kathode gespült wird, zumindest das Kathodenspülmedium in einem Kathodenspülkreislauf geführt wird, in welchem das Kathodenspülmedium an der Kathode mit Wasserstoff und/oder Kohlenmonoxid unter Ausbildung eines Kathodenspülmedium/Produktgas-Gemisches, das Reaktantdampf oder Reaktantgas enthalten kann, angereichert wird, nachfolgend zumindest dann, wenn das Kathodenspülmedium nicht das Produktgas ist, wenigstens ein Medium des Kathodenspülmedium/Produktgas-Gemisches wenigstens teilweise aus dem Kathodenspülmedium/Produktgas-Gemisch abgetrennt wird, und das Kathodenspülmedium und/oder das produktgasabgereicherte Kathodenspülmedium/Produktgas-Gemisch danach wieder der Kathode zugeführt wird; und/oder dann, wenn die Anode gespült wird, das Anodenspülmedium in einem Anodenspülkreislauf geführt wird, in welchem das Anodenspülmedium an der Anode mit Sauerstoff unter Ausbildung eines Anodenspülmedium/Sauerstoff-Gemisches angereichert wird, nachfolgend der Sauerstoff des Anodenspülmedium/Sauerstoff-Gemisches wenigstens teilweise von dem Anodenspülmedium abgetrennt wird und das Anodenspülmedium und/oder das sauerstoffabgereicherte Anodenspülmedium/Sauerstoff-Gemisch danach wieder der Anode zugeführt wird.

Das Kathodenspülmedium und/oder das Anodenspülmedium kann ein Medium, vorzugsweise ein Gas oder Gasgemisch, sein, das wenigstens einen Elektrolysereaktant und/oder wenigstens ein Produkt der Elektrolyse und/oder wenigstens ein an der Elektrolyse nicht beteiligtes Medium aufweist.

Es kann also bei dem erfindungsgemäßen Verfahren ein Reaktant oder ein Reaktant-Gasgemisch rezirkuliert, das heißt, im Kreislauf erneut der mit dem Reaktant zu versorgenden und zu spülenden Elektrode zugeführt werden. So kann bei dem erfindungsgemäßen Verfahren beispielsweise nicht bei der Elektrolyse verbrauchter Wasserdampf rezirkuliert, das heißt, im Kreislauf erneut der Kathode zur Reaktantzuführung und gleichzeitigen Kathodenspülung zugeführt werden.

Gemäß der vorliegenden Erfindung besteht nicht nur die Möglichkeit, die Sauerstoffelektrode, also die Anodenseite, der wenigstens einen Elektrolysezelle zu spülen. Alternativ oder in Ergänzung hierzu kann auch die Kathodenseite der wenigstens einen Elektrolysezelle, an welcher Wasserstoff und/oder Kohlenmonoxid entsteht, mit wenigstens einem geeigneten Spülmedium gespült werden. Es ist aber auch möglich, die Kathodenseite gar nicht zu spülen.

Das eigentliche Ziel der Spülung ist die Senkung des jeweiligen Partialdruckes an der gespülten Elektrode. Beispielsweise führt eine Spülung der Anode zu einer Senkung des Sauerstoffpartialdruckes an der Anode, wodurch die korrosiven Eigenschaften von Sauerstoff an der Anode verringert werden. Ferner führt eine hohe Konzentration des jeweils an der Elektrode gebildeten Gases zu einer Verminderung der elektrochemischen Leistungsfähigkeit der Elektrolysezelle. Bei einer Nutzung von Spülmedien, die das an der jeweiligen Elektrode zuzuführende Reaktantgas und/oder das gebildete Produktgas enthalten, führt zwar die Strömung des verwendeten Spülmediums zum Abtransport des an der jeweiligen Elektrode produzierten Gases, allerdings erfolgt die Partialdruckabsenkung an der jeweiligen Elektrode nicht im gleichen Maße wie mit einem Spülmedium, dass das an der jeweiligen Elektrode zuzuführende Reaktantgas und/oder das gebildete Produktgas nicht enthält. Der Leistungseinfluss ist abhängig von den Mengen des verwendeten Spülmediums und der daraus entstehenden Gaszusammensetzung an der jeweiligen Elektrode.

Das Elektrolyseverfahren kann derart gefahren werden, dass weniger als 100 % des Reaktanten in Produktgas umgesetzt werden, so dass ein wenigstens teilweises Abtransportieren des Produktgases durch den nicht umgesetzten Reaktanten erfolgt, wobei das Produktgas-Reaktantengemisch in einer Abtrennvorrichtung in die Bestandteile Produktgas und Reaktant wenigstens teilweise aufgetrennt wird, wobei ein Rezirkulieren des abgetrennten Reaktanten oder Produktgas-Reaktantengemisch und ein wenigstens teilweises Herausleiten des abgetrennten Produktgases aus dem Verfahren erfolgt.

Ferner kann bei dem erfindungsgemäßen Verfahren auch ein Teil des Produktgases oder das Produktgas-Reaktant-Gasgemisch ganz oder teilweise als oder mit dem Kathoden- und/oder Anodenspülmedium rezirkuliert, das heißt, im Kreislauf erneut der zu spülenden Elektrode zugeführt werden. So kann bei dem erfindungsgemäßen Verfahren beispielsweise ein Teil des an der Kathode erzeugten Wasserstoffes rezirkuliert, das heißt, im Kreislauf erneut der Kathode zu deren Spülung zugeführt werden. In dem letzteren Fall ist es erfindungsgemäß nicht notwendig, den Wasserstoff vollständig aus dem Kathodenspülmedium/Produktgas(Wasserstoff)-Gemisch abzutrennen.

Durch die bei dem erfindungsgemäßen Elektrolyseverfahren mögliche Rezirkulation des Reaktanten, wie Wasserdampf oder Kohlendioxid, kann die der Elektrolysezelle zuzuführende Ausgangsstoff- bzw. Reaktantmenge geringer gehalten werden, wodurch sich eine hohe Konvertierungsrate ergibt, also zum Beispiel bei der Elektrolyse von Wasserdampf ein hoher Prozentsatz des Wasserdampfes zu Wasserstoff umgesetzt wird. Gleiches gilt dann, wenn bei der Elektrolyse anstelle von oder zusätzlich zu Wasserdampf Kohlendioxid als Ausgangsstoff zum Einsatz kommt und Kohlendioxid rezirkuliert wird, wodurch die Konvertierungsrate von Kohlendioxid erhöht wird.

Die Elektrolysezelle kann insbesondere in einem Temperaturbereich von 600 °C bis 1.000 °C betrieben werden.

Die Effizienz eines Gesamtprozesses, in den das erfindungsgemäße Elektrolyseverfahren eingebunden ist, kann noch gesteigert werden, wenn in einer Ausführungsform des erfindungsgemäßen Elektrolyseverfahrens wenigstens ein Gasausgang der Elektrolysezelle mit einem Gaseingang der Elektrolysezelle unter Ausbildung eines Gaskreislaufes gekoppelt wird, und zumindest teilweise durch die Elektrolysezelle gebildetes, nicht umgesetztes Reaktantgas oder nicht umgesetzten Reaktantdampf und/oder Spülmedium enthaltendes Produktgas-Gemisch in diesem Gaskreislauf rezirkuliert und als Eingangsgas für die Elektrolyse verwendet wird. Hierzu kann beispielsweise von einem mit dem Elektrolyseverfahren hergestellten, noch Wasserdampf enthaltenden Produktgas-Gemisch Wasserstoff abgetrennt, wenigstens ein Anteil des wasserstoffentreicherten Produktgas-Gemisches abgeführt und zu einem Prozessgaseingang der Elektrolysezelle zurückgeführt werden. Auf diese Weise ist es möglich, den in dem zu erzeugenden Wasserstoffgas enthaltenen Wasserdampfgehalt zu reduzieren. Dies führt zu einem trockeneren Produktgas. Durch eine Rückführung eines nicht verbrauchten Reaktanten bzw. eines den Reaktanten enthaltenden Produktgas-Gemisches an den Prozesseingang, das heißt, eine erneute Zuführung des nicht verbrauchten Reaktanten zu der Kathode der Elektrolysezelle, wird die Gesamtkonvertierungsrate des Elektrolysesystems erhöht.

Sinnvoll ist es hierbei, wenn ein wasserstoffentreicherter Anteil eines mit dem Elektrolyseverfahren ausgebildeten Wasserstoff/Wasserdampf-Gasgemisches und/oder ein kohlenmonoxidentreicherter Anteil eines mit dem Elektrolyseverfahren ausgebildeten Kohlenmonoxid/Kohlendioxid-Gasgemisches mithilfe wenigstens eines Rezirkulationsgebläses und/oder wenigstens einer Strahlpumpe wenigstens einem Prozesseingang des Elektrolyseverfahrens zugeführt wird. Neben der erneuten Umsetzbarkeit des rückgeführten Reaktanten besteht ein weiterer Vorteil dieser Vorgehensweise darin, dass der wieder an den Prozesseingang zurückgeführte Wasserstoff und/oder das zurückgeführte Kohlenmonoxid für eine reduzierende Atmosphäre auf der Dampfseite der Elektrolysezelle sorgt, wobei die reduzierende Atmosphäre die Degradationswahrscheinlichkeit der Kathode, also hier der Wasserstoffelektrode, verringert. So ist es bei dieser Vorgehensweise grundsätzlich möglich, dass das rückgeführte Reaktant/Produktgas-Gemisch als Spülmedium verwendet wird, sodass kein oder nur wenig weiteres Spülmedium in den Prozess eingebracht werden muss.

So ist es grundsätzlich mit dieser Verfahrensweise möglich, Wasserstoff aus dem Wasserstoff/Wasserdampf-Gemisch größtenteils, wie beispielsweise zum einem Prozentsatz von 80 bis 99 % des in dem Wasserstoff/Wasserdampf-Gemisch enthaltenen Wasserstoffs, abzutrennen und abzuführen und den verbleibenden Wasserdampf mit einem geringen Restanteil von Wasserstoff zu rezirkulieren.

Von dem bei dem erfindungsgemäßen Elektrolyseverfahren ausgebildeten Wasserstoff/Wasserdampf-Gemisch kann jedoch auch erst ein Anteil des gebildeten Wasserstoff/Wasserdampf-Gemisches abgezweigt, daraufhin wasserstoffentreichert und nachfolgend an den Prozesseingang zurückgeführt werden, wobei das nicht zurückgeführte Wasserstoff/Wasserdampf-Gemisch seine Feuchte beibehält.

Ferner ist es bei dem erfindungsgemäßen Verfahren möglich, dass ein Teil eines Spülgases, wie beispielsweise Wasserstoff, enthaltenden Produktgasgemisches ohne Separation seiner Komponenten zum Prozesseingang zurückgeführt wird. Diese Vorgehensweise kann beispielsweise genutzt werden, um am Prozesseingang weniger frisches Spülgas zuführen zu müssen.

Als Reaktant kann Wasser und/oder Kohlendioxid als Gas, Dampf und/oder gasartiger Dampf verwendet werden, wobei als Produktgase entsprechend der verwendeten Reaktanten Wasserstoff und/oder Kohlenstoffmonoxid gebildet werden.

Vor dem erneuten Einbringen in den Kathodenspülkreislauf / Anodenspülkreislauf kann ein Erhitzen und/oder Verdichten des wenigstens ersten / zweiten Spülmediums erfolgen.

Ein zur Effektivitätserhöhung des erfindungsgemäßen Elektrolyseverfahrens weiter beitragendes Verfahrensmerkmal kann darin bestehen, dass aus dem nach der Spülung einer Elektrode entstandenen Spülmedium-Produktgas-Gemisch, wobei unter dem Produktgas Sauerstoff oder Wasserstoff und/oder Kohlenmonoxid verstanden wird, das Produktgas wenigstens teilweise abgetrennt wird. Dies hat zur Folge, dass das um das Produktgas zumindest teilweise abgereicherte Spülmedium-Produktgas-Gemisch bei einer daraufhin erfolgenden erneuten Spülung der jeweiligen Elektrode das abgetrennte Produktgas nicht wieder der Elektrode zuführt, sondern vielmehr das an der Elektrode erneut gebildete Produktgas abführt.

Die Elektrolyseanordnung, insbesondere zur Durchführung eines entsprechend erfindungsgemäßen Elektrolyseverfahrens, weist
wenigstens drei voneinander separate Druckräume, nämlich einen Anodenraum, einen Kathodenraum, die zusammen die Elektrolysezelle bilden, und einen Behälterraum auf, wobei
- der Anodenraum und der Kathodenraum innerhalb des Behälterraumes angeordnet sind;
- zur Zuführung eines Reaktanten in den Kathodenraum und zur Zuführung wenigstens eines ersten Spülmediums, wobei das wenigstens erste Spülmedium inert gegenüber dem Sauerstoff ist, in den Anodenraum jeweils wenigstens eine Medienzuleitung vorgesehen ist;
- zur Abführung wenigstens des ersten Spülmediums und des sich durch die Elektrolyse bildenden Sauerstoffs aus dem Anodenraum und zur Abführung eines sich durch die Elektrolyse bildenden Produktgases aus dem Kathodenraum jeweils wenigstens eine abgehende Leitung vorgesehen ist;
- entweder der Anodenraum oder der Kathodenraum mit dem Behälterraum verbunden ist, so dass ein Gasfluss zwischen den beiden verbundenen Räumen möglich ist
   und
- wenigstens ein Spülkreislauf vorgesehen ist, so dass wenigstens der Anodenraum mit dem ersten Spülmedium spülbar ist,
wobei
der Anodenraum, der Kathodenraum und der Behälterraum jeweils als separate Druckräume, also als Räume, in welchen der Innendruck des jeweiligen Raumes separat von dem Innendruck der anderen Räume ausbildbar oder einstellbar ist
und
stromabwärts nach der Elektrolysezelle in dem wenigstens einem Spülkreislauf eine Abtrennvorrichtung zum Abtrennen des wenigstens ersten Spülmediums / Sauerstoffs vorgesehen ist, wobei das wenigstens erste Spülmedium über den wenigstens einen Spülkreislauf rezirkulierbar ist und der Sauerstoff über eine Leitung aus dem Elektrolysesystem abführbar ist
und
die wenigstens eine Abtrennvorrichtung mit wenigstens einer Abtrennmembran und/oder einer porösen Abtrennstruktur und/oder einem Sorbens und/oder Druck- und/oder Temperaturwechseladsorptionsanordnung ausgebildet ist.

Wenn in der Beschreibung Merkmale der Anordnung des Anspruchs 6 in "und/oder" Verknüpfungen angegeben werden, bedeutet das dennoch, das die Merkmale des Anspruchs 6 obligatorisch sind.

Ferner kann das/ein Elektrolyseverfahren an wenigstens einer Elektrolysezelle betrieben werden, wobei aus Reaktantgas und/oder Reaktantdampf an einer Kathode der Elektrolysezelle Produktgas in Form von Wasserstoff und/oder Kohlenmonoxid und an einer Anode der Elektrolysezelle Sauerstoff gebildet wird, wobei an der wenigstens einen Elektrolysezelle wenigstens ein Kathodenraum an der Kathode, wenigstens ein Anodenraum an der Anode und wenigstens ein die Elektrolysezelle umgebender, mit einem mit Sauerstoff und Wasserstoff und/oder Kohlenmonoxid nicht reagierenden Dampf oder Gas gefüllter Behälterraum vorgesehen sind, wobei der wenigstens eine Kathodenraum, der wenigstens eine Anodenraum und der wenigstens eine Behälterraum als voneinander separate Druckräume ausgebildet sind, und wobei der wenigstens eine Behälterraum mit dem wenigstens einen Anodenraum oder dem wenigstens einen Kathodenraum für einen Gasfluss zwischen diesen Druckräumen verbunden wird.

Das Abtrennen des Wasserstoffs aus dem Kathodenspülmedium/Wasserstoff-Gemisch kann mit wenigstens einer Abtrennvorrichtung, die entweder Wasserstoff oder Kathodenspülmedium von dem Kathodenspülmedium/Wasserstoff-Gemisch abtrennt, durchgeführt werden. Das Abtrennen von Kohlenmonoxid aus dem Kathodenspülmedium/Kohlenmonoxid-Gemisch kann mit wenigstens einer Abtrennvorrichtung, die entweder Kohlenmonoxid oder Kathodenspülmedium von dem Kathodenspülmedium/Wasserstoff-Gemisch abtrennt, durchgeführt werden. Das Abtrennen von Sauerstoff aus dem Anodenspülmedium/SauerstoffGemisch kann mit wenigstens einer Abtrennvorrichtung, die entweder Sauerstoff oder Anodenspülmedium von dem Anodenspülmedium/Sauerstoff-Gemisch abtrennt, durchgeführt werden.

Um ein stetiges Anreichern des jeweils verwendeten Spülmediums mit dem an der jeweiligen Elektrode gebildeten Produktgas zu verhindern, wird in dem erfindungsgemäßen Verfahren innerhalb des Kathodenspülkreislaufes bzw. des Anodenspülkreislaufes das an der jeweiligen Elektrode gebildete Produktgas vom Spülmedium vorzugsweise abgetrennt, wobei es gleich ist, welches Medium von welchem anderen Medium hierbei getrennt wird. Gemäß einem geeigneten Ausführungsbeispiel der vorliegenden Erfindung ist vorgesehen, dass die Abtrennvorrichtung wenigstens eine Abtrennmembran und/oder eine poröse Abtrennstruktur aufweist, an die das Spülmedium/Produktgas-Gemisch, welches auch das Reaktantgas und/oder den Reaktantdampf enthalten kann, geleitet wird und welche von wenigstens einem in dem Spülmedium/Produktgas-Gemisch enthaltenen Medium mit einer anderen Geschwindigkeit als von dem oder den weiteren in dem Spülmedium/Produktgas-Gemisch enthaltenen Medium bzw. Medien durchdrungen wird.

Innerhalb des Behälterraumes können weiter mehrere Elektrolysezellen mit Anodenräumen und Kathodenräumen angeordnet werden, wobei die Kathodenräume miteinander verbunden und die Anodenräume miteinander verbunden sind, so dass mehrere Kathodenräume einen gemeinsamen Kathodenraum bilden und mehrere Anodenräume einen gemeinsamen Anodenraum bilden.

Zur Gaszu- oder Gasabführung können vor, nach oder in dem Anodenraum und/oder dem Kathodenraum Druckregelungseinheiten vorgesehen sein, durch die der jeweilige Druck in den Druckräumen einstellbar ist.

Vorzugsweise wird bei dem erfindungsgemäßen Verfahren der jeweilige Druck in den Druckräumen über wenigstens ein an einem Eingang und/oder einem Ausgang des Anodenraumes und/oder des Kathodenraumes vorgesehenes, beispielsweise über wenigstens einen Differenzdruckregler gesteuertes Ventil eingestellt.

Es können zwei Spülkreisläufe vorgesehen werden, so dass der Anodenraum mit einem ersten Spülmedium und der Kathodenraum mit einem zweiten Spülmedium und/oder dem Reaktanten spülbar ist.

Zur Rezirkulation mittels des wenigstens einen Spülkreislaufes kann ein Rezirkulationsgebläse und/oder eine Strahlpumpe und/oder Heizer/Wärmeüberträger vorgesehen sein.

In einer vorteilhaften Ausführungsform der vorliegenden Erfindung wird das Kathodenspülmedium in einem geschlossenen Kathodenspülkreislauf geführt, dem das Kathodenspülmedium zuleitbar und aus dem wenigstens Wasserstoff oder wenigstens Kohlenmonoxid ableitbar ist, und/oder das Anodenspülmedium in einem geschlossenen Anodenspülkreislauf geführt, dem das Anodenspülmedium zuleitbar und aus dem wenigstens Sauerstoff ableitbar ist. In dem geschlossenen Kathodenspülkreislauf und/oder in dem geschlossenen Anodenspülkreislauf wird beispielsweise ein Inert- oder Edelgas bei Arbeitstemperatur und Arbeitsdruck der Elektrolyse im Kreis durch den Kathodenraum bzw. den Anodenraum der Elektrolysezelle geleitet.

Um die Materialbelastung der einzelnen Bauteile der Elektrolysezelle gering zu halten, empfiehlt es sich bei dem erfindungsgemäßen Elektrolyseverfahren, das Kathodenspülmedium vor seiner Einleitung in den Kathodenspülkreislauf und/oder innerhalb des Kathodenspülkreislaufes und/oder das Anodenspülmedium vor seiner Einleitung in den Anodenspülkreislauf und/oder innerhalb des Anodenspülkreislaufes mit wenigstens einem Wärmeüberträger und/oder Heizer auf eine Arbeitstemperatur der Elektrolysezelle und/oder mit wenigstens einem Verdichter und/oder wenigstens einer Strahlpumpe auf einen Arbeitsdruck der Elektrolysezelle zu bringen. Mit dem wenigstens einen Verdichter können beispielsweise bei einer Zuleitung von externem Spülmedium Druckverluste ausgeglichen werden. Ferner ist es möglich, mit dem wenigstens einen Verdichter Druckverluste bei einer Rezirkulation von Gasen in dem erfindungsgemäßen Verfahren auszugleichen. Dabei ist es ein Vorteil des erfindungsgemäßen Verfahrens, dass hier durch den wenigstens einen Verdichter bzw. die wenigstens eine Strahlpumpe nur eine Restverdichtung eines bereits zumindest anteilig komprimierten Gases bzw. Gasgemisches, welches zumindest teilweise bereits den Elektrolyseprozess durchlaufen hat, vorgenommen werden muss. Für diese Restverdichtung ist bei dem erfindungsgemäßen Verfahren eine geringere Verdichterleistung als bei aus dem Stand der Technik bekannten Verfahren, in welcher der Elektrolysezelle nur "frische" Gase zugeführt werden, erforderlich.

Eine besondere Ausführung ist gegeben, wenn während des An- und/oder Abfahrbetriebes der Elektrolysezelle eine temporäre Verbindung zwischen dem Anodenraum und dem Kathodenraum vorgesehen und schaltbar ist, so dass ein Gasfluss zwischen den beiden verbundenen Räumen während des An- und/oder Abfahrbetriebes möglich ist.

In einer Weiterbildung ist vorgesehen, dass in einem Anfahrbetrieb und/oder einem Abfahrbetrieb des Elektrolyseverfahrens wenigstens ein Anodenraum mit wenigstens einem Kathodenraum für einen Gasfluss und einen damit verbundenen Druckan- oder -ausgleich zwischen diesen Druckräumen verbunden wird.

Ferner muss die wenigstens eine Abtrennvorrichtung mit wenigstens einer Abtrennmembran und/oder einer porösen Abtrennstruktur und/oder einem Sorbens und/oder Druck- und/oder Temperaturwechseladsorptionsanordnung ausgebildet werden.

Es ist auch möglich, eine Abtrennvorrichtung mit wenigstens einem Sorbens zu verwenden, an oder in das das Spülmedium/Produktgas-Gemisch, welches auch das Reaktantgas enthalten kann, geleitet wird, und das wenigstens ein in dem Spülmedium/Produktgas-Gemisch enthaltenes Medium stärker oder schlechter als wenigstens ein anderes in dem Spülmedium/Produktgas-Gemisch enthaltenes Medium adsorbiert.

Als Sorbens kann bei der vorliegenden Erfindung beispielsweise wenigstens eine Abtrennflüssigkeit, die Wasserstoff oder Wasserdampf oder das Kathodenspülmedium wenigstens teilweise aus dem Kathodenspülmedium/Wasserstoff-Gemisch absorbiert und/oder die Kohlenmonoxid oder Kohlendioxid oder das Kathodenspülmedium wenigstens teilweise aus dem Kathodenspülmedium/Kohlenmonoxid-Gemisch absorbiert und/oder die Sauerstoff oder das Anodenspülmedium wenigstens teilweise aus dem Anodenspülmedium/Sauerstoff-Gemisch absorbiert, verwendet werden. Wenn eine Abtrennflüssigkeit als Sorbens verwendet wird, kann das Spülmedium/Produktgas-Gemisch, das auch das Reaktantgas und/oder den Reaktantdampf enthalten kann, abgekühlt und dann durch die Abtrennflüssigkeit geleitet werden, die beispielsweise Sauerstoff aus einem Anodenspülmedium/Sauerstoff-Gemisch absorbiert. Das sauerstoffabgereicherte Spülmedium kann anschließend durch Rekuperation im Gegenstrom eines Produktgases der Elektrolysezelle aufgewärmt und wieder in die Elektrolysezelle geleitet werden.

Weiter hat es sich auch als günstig erwiesen, wenn bei der vorliegenden Erfindung wenigstens ein Medium des Kathodenspülmedium/Produktgas-Gemisches, das auch das Reaktantgas und/oder den Reaktantdampf enthalten kann, von wenigstens einem weiteren Medium des Kathodenspülmedium/Produktgas-Gemisches und/oder wenigstens ein Medium des Anodenspülmedium/Sauerstoff-Gemisches von wenigstens einem anderen Medium des Anodenspülmedium/Sauerstoff-Gemisches unter Verwendung wenigstens eines Druck- und/oder Temperaturwechseladsorptionsverfahrens abgetrennt wird.

Am effizientesten kann ein Druckwechselabsorptionsverfahren (PSA - pressure swing adsorption) bei Arbeitstemperatur der Elektrolyse erfolgen. Es ist allerdings auch möglich, das Kathodenspülmedium/Produktgas-Gemisch und/oder das Anodenspülmedium/SauerstoffGemisch abzukühlen, bei tieferen Temperaturen durch eine Membran zu leiten und vor Wiedereintritt in die Elektrolysezelle zu erwärmen. Dabei kann ein Wärmeüberträger das von der Membran strömende Gas gegen das zur Membran strömende Gas aufwärmen. Auf jeden Fall sollte der Druckverlust beim Durchtritt durch die Membran möglichst gering sein. Anschließend sollte der Druckverlust mittels wenigstens eines Verdichters wieder ausgeglichen werden, um das jeweilige Spülmedium dem Prozess wieder zuführen zu können.

In einer weiteren Variante der vorliegenden Erfindung ist es auch möglich, dass wenigstens ein Medium des Kathodenspülmedium/Produktgas-Gemisches, das auch Reaktantgas und/oder Reaktantdampf enthalten kann, von wenigstens einem weiteren Medium des Kathodenspülmedium/Produktgas-Gemisches und/oder Sauerstoff des Anodenspülmedium/Sauerstoff-Gemisches von dem Anodenspülmedium des Anodenspülmedium/Sauerstoff-Gemisches durch kryogene Gaszerlegung abgetrennt wird. Gemäß einem nächsten Ausführungsbeispiel des erfindungsgemäßen Verfahrens ist vorgesehen, dass wenigstens ein Medium des Kathodenspülmedium/Produktgas-Gemisches, das auch das Reaktantgas und/oder den Reaktantdampf enthalten kann, von wenigstens einem weiteren Medium des Kathodenspülmedium/Produktgas-Gemisches und/oder Sauerstoff des Anodenspülmedium/Sauerstoff-Gemisches von dem Anodenspülmedium des Anodenspülmedium/Sauerstoff-Gemisches chemisch abgetrennt wird.

Das chemische Abtrennen kann beispielsweise dadurch erfolgen, dass Produktgas des Kathodenspülmedium/Produktgas-Gemisches und/oder Sauerstoff des Anodenspülmedium/Sauerstoff-Gemisches wenigstens teilweise verbrannt wird.

Eine Kühlanordnung zum Abkühlen des/der der Abtrennvorrichtung zugeführten Medien kann erfindungsgemäß vorgesehen werden, wobei die dort entziehbare Wärme rekuperativ zur Erwärmung des/der zuzuführenden Medien nutzbar ist.

Um die Arbeitsbedingungen der Abtrennvorrichtung(en) und gegebenenfalls bei dem erfindungsgemäßen Verfahren notwendiger, druckverlustausgleichender Kreislaufverdichter zu erleichtern, kann bei dem erfindungsgemäßen Elektrolyseverfahren das Kathodenspülmedium/Produktgas-Gemisch, das auch das Reaktantgas und/oder den Reaktantdampf enthalten kann, vor seiner Zuführung zu einer Abtrennvorrichtung abgekühlt werden, und das mit der Abtrennvorrichtung produktgasabgereicherte Kathodenspülmedium/Produktgas-Gemisch vor seiner Zufuhr zu der Kathode erwärmt werden, und/oder es kann das Anodenspülmedium/Sauerstoff-Gemisch vor seiner Zuführung zu einer Abtrennvorrichtung abgekühlt werden, und das mit der Abtrennvorrichtung sauerstoffabgereicherte Anodenspülmedium/Sauerstoff-Gemisch vor seiner Zufuhr zu der Anode erwärmt werden.

Besonders effektiv ist es, das erfindungsgemäße Verfahren so auszuführen, dass das der Kathode zuströmende Kathodenspülmedium von dem von der Kathode wegströmenden Kathodenspülmedium/Produktgas-Gemisch, das auch das Reaktantgas und/oder den Reaktantdampf enthalten kann, und/oder das der Anode zuströmende Anodenspülmedium von dem von der Anode wegströmenden Anodenspülmedium/Sauerstoff-Gemisch in wenigstens einem Wärmeüberträger erwärmt wird. Mithilfe des wenigstens einen Wärmeüberträgers kann der Energieaufwand für das Erwärmen des jeweils eingesetzten Spülmediums gering gehalten werden. In dem wenigstens einen Wärmeüberträger erwärmt das heiße, von der jeweiligen Elektrode ausströmende Spülmedium/Produktgas-Gemisch das kalte, einströmende Spülmedium. Die benötigte Menge des Spülmediums wird bestimmt durch den für den Betrieb zweckmäßigen Gaspartialdruck an der jeweiligen Elektrode.

Die Medienzuleitunge(n) und/oder abgehende(n) Leitung(en) für die Anode können bei Verbindung des Anodenraums mit dem Behälterraum im Behälterraum enden.

Ferner können die Medienzuleitunge(n) und/oder abgehende(n) Leitung(en) für die Kathode bei Verbindung des Kathodenraums mit dem Behälterraum im Behälterraum enden.

Die Elektrolysezelle ist eine Festoxidelektrolysezelle, eine Festoxidzelle, oder eine reversible Festoxidzelle. Vorzugsweise, aber nicht zwingend, wird bei der vorliegenden Erfindung als Elektrolysezelle eine Festoxidelektrolysezelle unter Verwendung eines Hochtemperaturelektrolyseverfahrens verwendet.

Das erste und zweite Spülmedium können identisch sein, wobei bevorzugt Stickstoff das erste und zweite Spülmedium ist.

Als Spülmedium können verschiedene, komprimierte oder auch nicht komprimierte Medien zum Einsatz kommen. Vorzugsweise kommen als Spülmedien Gase in Betracht.

In einer favorisierten Variante der vorliegenden Erfindung wird als Kathodenspülmedium wenigstens ein mit Wasserstoff und/oder Kohlenmonoxid nicht chemisch reagierendes Fluid verwendet und/oder als Anodenspülmedium wenigstens ein mit Sauerstoff nicht chemisch reagierendes Fluid verwendet. Als Spülmedium kommt somit ein Inertgas oder Edelgas, wie beispielsweise Argon, oder auch Luft oder auch Wasserstoff oder auch Wasserdampf oder auch Kohlendioxid in Betracht, wobei diese Aufzählung lediglich beispielhaft und nicht abschließend zu verstehen ist. Nicht-sauerstoffhaltige Gase eignen sich insbesondere als Spülmedium, um an der gespülten Elektrode Korrosion oder Oxidation zu verhindern und die notwendige Spannung zu verringern.

Bevorzugte Ausführungsformen der vorliegenden Erfindung, deren Aufbau, Funktion und Vorteile, werden im Folgenden anhand von Figuren näher erläutert, wobei
- **Figur 1**: eine Ausführungsform des erfindungsgemäßen Verfahrens zeigt, in dem eine Spülung von Kathode und Anode sowie eine Differenzdruckregelung zwischen den einzelnen Druckräumen an einem schematisch im Querschnitt dargestellten Elektrolysemodul vorgenommen wird;
- **Figur 2**: schematisch eine Ausführungsform des erfindungsgemäßen Verfahrens mit einer Druckregelung an einer Elektrolysezelle durch eine dauerhafte Verbindung von zwei Druckräumen zeigt;
- **Figur 3**: schematisch eine Ausführungsform des erfindungsgemäßen Verfahrens zeigt, in dem eine Druckregelung an einer Elektrolysezelle durch eine Verbindung eines Kathodenraumes mit einem Anodenraum der Elektrolysezelle in einem An- und/oder Abfahrbetrieb des Elektrolyseverfahrens vorgenommen wird; und
- **Figur 4**: schematisch eine weitere Ausführungsform des erfindungsgemäßen Verfahrens zeigt, in dem zur Druckregelung ein Kathodenraum und ein Anodenraum einer Elektrolysezelle am Prozessausgang dauerhaft verbunden werden.

In den nachfolgend im Detail beschriebenen Figuren bezeichnen gleiche Bezugszeichen gleiche Merkmale der vorliegenden Erfindung, wobei eine bereits erfolgte Beschreibung des jeweiligen, gleich bezeichneten Merkmals auch für nachfolgende Figuren gilt.

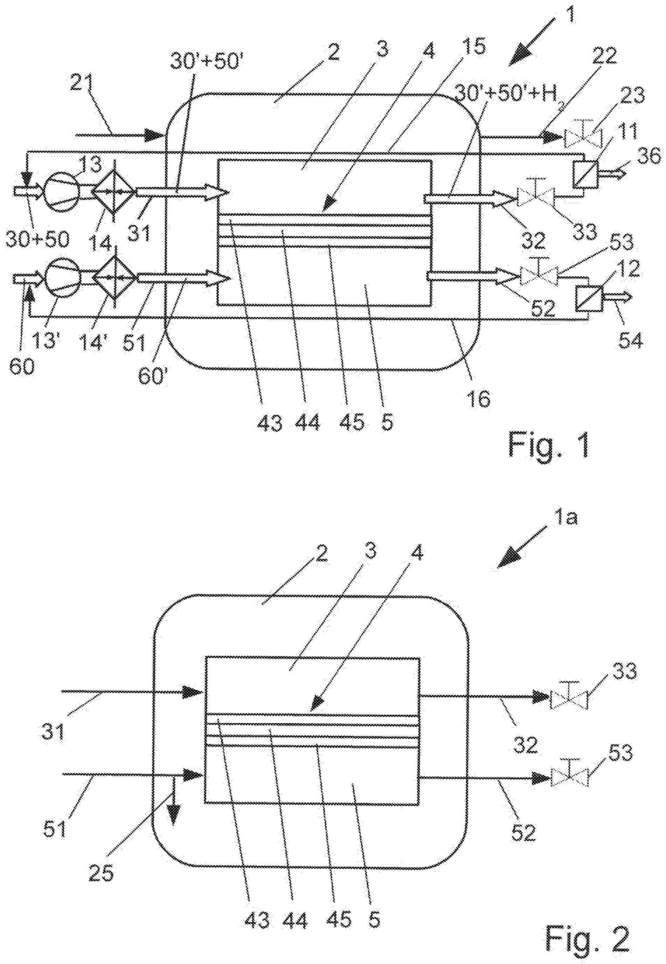

**Figur 1** veranschaulicht anhand eines schematisch im Querschnitt dargestellten Elektrolysemoduls 1 eine Ausführungsform der vorliegenden Erfindung gemäß einem ersten Aspekt des erfindungsgemäßen Verfahrens.

Das dargestellte Elektrolysemodul 1 weist eine Elektrolysezelle 4 mit einer Kathode 43, einer Anode 45 und einem zwischen der Kathode 43 und der Anode 45 befindlichen Elektrolyten 44 auf. Der besseren Übersichtlichkeit halber ist von dem Elektrolysemodul 1 nur eine einzige Elektrolysezelle 4 dargestellt. In der Praxis besteht jedoch das Elektrolysemodul 1 typischerweise aus einem Stapel von Elektrolysezellen 4.

An der Kathode 43 ist ein Kathodenraum 3 vorgesehen. An der Anode 45 befindet sich ein Anodenraum 5. Um die Kathode 43, die Anode 45, den Kathodenraum 3 und den Anodenraum 5 ist ein Behälterraum 2 vorgesehen. Die Elektrolysezelle 1 kann auch noch von weiteren, nicht gezeigten Behältern oder Behälterelementen umschlossen sein. In anderen, nicht gezeigten Varianten der vorliegenden Erfindung können auch mehrere Kathodenräume 3 und/oder mehrere Anodenräume 5 und/oder mehrere Behälterräume 2 vorgesehen sein.

Die in dem Beispiel von Figur 1 verwendete Elektrolysezelle 4 ist eine Festoxidelektrolysezelle (SOEC - solid oxide electrolysis cell), welche ein festes Oxid, wie beispielsweise eine Keramik, als Elektrolyten 44 verwendet. Als Material für die Kathode 43 und/oder die Anode 45 können beispielsweise Nickel oder verschiedene Keramiken zum Einsatz kommen.

Die in Figur 1 dargestellte Elektrolysezelle 4 arbeitet bei hohen Temperaturen zwischen 600 und 1000 °C, beispielsweise bei etwa 850 °C. Das erfindungsgemäße Verfahren kann in anderen Ausführungsformen der vorliegenden Erfindung auch bei anderen, geringeren oder auch höheren Temperaturen zum Einsatz kommen.

Der Kathode 43 der Elektrolysezelle 4 wird über wenigstens eine Zuleitung 31 ein Reaktant 30 in Form eines Reaktantgases oder Reaktantdampfes zugeleitet. In dem Ausführungsbeispiel von Figur 1 wird als Reaktant 30 Wasserdampf verwendet. In anderen, nicht gezeigten Ausführungsbeispielen der vorliegenden Erfindung kann als Reaktant 30 beispielsweise auch Kohlendioxid (CO2) und/oder ein anderes, mit Hilfe einer Elektrolyse zerlegbares Gas oder Gasgemisch verwendet werden. Es kann als Reaktant 30 auch ein Gemisch aus Wasserdampf und CO2 verwendet werden. Der Reaktant 30 muss keine absolute Reinheit besitzen, sondern kann auch Bestandteile anderer Gase umfassen.

Zwischen der Kathode 43 und der Anode 45 wird in dem an dem Elektrolysemodul 1 ausgeführten Elektrolyseverfahren eine Spannung angelegt, die bewirkt, dass Sauerstoffionen (O2-) des in der Elektrolyse zerlegten Reaktanten 30 von der Kathode 43 über den Elektrolyten 44 zu der Anode 45 geleitet werden. An der Kathode 43 findet hierzu eine Reduktion des Reaktanten 30 statt. Bei einer Verwendung von Wasserdampf als Reaktant 30 bildet sich an der Kathode 43 gasförmiger Wasserstoff (H2), und bei einer Verwendung von Kohlendioxid als Reaktant 30 bildet sich an der Kathode 43 gasförmiges Kohlenmonoxid (CO). An der Anode 45 findet eine Oxidation statt. Es bildet sich in beiden genannten Fällen an der Anode 45 gasförmiger Sauerstoff (O2).

In dem in Figur 1 dargestellten Elektrolyseverfahren dient die Elektrolysezelle 4 somit einer Umwandlung von Wasser bzw. Wasserdampf in Wasserstoff und Sauerstoff. Insbesondere der gebildete Wasserstoff eignet sich als Energieträger. Er kann beispielsweise in nachfolgenden Prozessschritten, wie es z. B. in der Druckschrift DE 10 2006 035 893 A1 beschrieben ist, zu Kohlenwasserstoff(en), wie Methanol, weiterverarbeitet werden.

In der Ausführungsform von Figur 1 ist sowohl an der Kathode 43 als auch an der Anode 45 eine Spülung der jeweiligen Elektrode 43, 45 vorgesehen. Die Spülung erfolgt jeweils mit einem Spülmedium 50, 60, welches an Kathode 43 und Anode 45 gleich oder auch unterschiedlich sein kann.

Zwingend ist das verwendete Spülmedium 50 ein Inertgas, wie beispielsweise Stickstoff, welches mit dem an der jeweiligen Elektrode 43, 45 gebildeten Produktgas nicht chemisch reagiert. Es kann an der Kathode 43 aber auch Wasserdampf und/oder Kohlendioxid als Spülmedium 50 und an der Anode 45 Wasserdampf, Kohlendioxid, Sauerstoff und/oder Luft als Spülmedium 60 bei dem erfindungsgemäßen Elektrolyseverfahren eingesetzt werden.

Sowohl das an der Kathode 43 verwendete Kathodenspülmedium 50 als auch das an der Anode 45 verwendete Anodenspülmedium 60 werden jeweils in einem Spülkreislauf, dem Kathodenspülkreislauf 15 bzw. dem Anodenspülkreislauf 16, geführt.

Das Kathodenspülmedium 50 wird in dem Elektrolysemodul 1 über die gleiche Zuleitung 31 der Kathode 43 der Elektrolysezelle 4 zugeführt, über welche auch der Reaktant 30 der Kathode 43 zugeleitet wird. In anderen, nicht gezeigten Ausführungsbeispiel der vorliegenden Erfindung kann das Kathodenspülmedium 50 auch über eine separate Zuleitung der Kathode 43 zugeführt werden. Der Reaktant 30 und das Kathodenspülmedium 50 werden von einem Verdichter 13 unter Druck gesetzt. Das mit Druck beaufschlagte Reaktant-Kathodenspülmedium-Gemisch 30'+50' wird nachfolgend in einem Heizer 14 auf Arbeitstemperatur der Elektrolysezelle 4 erwärmt. Daraufhin wird das auf Arbeitsdruck und Arbeitstemperatur befindliche Reaktant-Kathodenspülmedium-Gemisch 30'+50' in den Kathodenraum 3 geleitet.

Innerhalb des Kathodenraumes 3 wird der Reaktant 30' und das Kathodenspülmedium 50' an die Kathode 3 geleitet. Durch die an der Kathode 43 stattfindende Reduktionsreaktion wird der Reaktant 30', das heißt, in dem gezeigten Ausführungsbeispiel der zugeführte Wasserdampf, zumindest teilweise zu Wasserstoff umgesetzt.

Das Kathodenspülmedium 50' nimmt mit seiner Strömung den an der Kathode 43 gebildeten Wasserstoff, einschließlich des nicht umgesetzten Reaktanten 30', mit. Bei anderen Ausführungsformen des erfindungsgemäßen Elektrolyseverfahrens, in welchen anstelle oder zusätzlich zu Wasserstoff an der Kathode 43 Kohlenmonoxid ausgebildet wird, nimmt das Kathodenspülmedium 50' das an der Kathode 43 ausgebildete Kohlenmonoxid sowie das nicht umgesetzte Kohlendioxid mit. In der Ausführungsform von Figur 1 entsteht somit in dem Kathodenraum 3 ein Wasserdampf enthaltendes Kathodenspülmedium/Wasserstoff-Gemisch 30'+50'+H₂ bzw. in anderen Varianten der Elektrolyseverfahrens ein Kohlendioxid enthaltendes Kathodenspülmedium/Kohlenmonoxid-Gemisch 30'+50'+CO.

Das Kathodenspülmedium/Wasserstoff-Gemisch 30'+50'+H₂ kann daraufhin einer Abtrennvorrichtung 11 zugeführt werden. Die Abtrennvorrichtung 11 kann beispielsweise Wasserstoff des Kathodenspülmedium/Wasserstoff-Gemisches 30'+50'+H₂ von den weiteren Medien 30'+50' des Kathodenspülmedium/Wasserstoff-Gemisches 30'+50'+H₂ abtrennen. Es ist aber auch möglich, beispielsweise mit einer in Figur 1 nicht gezeigten Kondensationsvorrichtung den Wasserdampf von dem Kathodenspülmedium/Wasserstoff-Gemisch 30'+50'+H₂ abzutrennen.

In Varianten des erfindungsgemäßen Elektrolyseverfahrens, in welchen anstelle oder zusätzlich zu Wasserstoff Kohlenmonoxid an der Kathode 43 erzeugt wird, kann anstelle der Wasserstoffabtrennung eine Kohlenmonoxidabtrennung zum Einsatz kommen, in welcher beispielsweise Kohlenmonoxid des Kathodenspülmedium/Kohlenmonoxid-Gemisches 30'+50'+CO von den weiteren Medien 30'+50' abgetrennt wird. Der abgetrennte Wasserstoff bzw. das abgetrennte Kohlenmonoxid kann daraufhin über eine separate Leitung 36 abgeführt werden. Typischerweise wird der gewonnene Wasserstoff bzw. das gewonnene Kohlenmonoxid nachfolgend weiterverarbeitet.

Eine Stoffabtrennung muss jedoch bei dem erfindungsgemäßen Verfahren nicht unbedingt durchgeführt werden.

Das hinsichtlich seiner Zusammensetzung durch Stoffabtrennung veränderte oder unveränderte Kathodenspülmedium/Wasserstoff-Gemisch 30'+50'+H₂ bzw. das hinsichtlich seiner Zusammensetzung durch Stoffabtrennung veränderte oder unveränderte Kathodenspülmedium/Kohlenmonoxid-Gemisch 30'+50'+CO wird nachfolgend innerhalb des Kathodenspülkreislaufes 15 wiederum dem Kathodenraum 3 zugeführt. Dies kann, wie es beispielhaft anhand des Elektrolysemoduls 1 dargestellt ist, über die gleiche Zuleitung 31 erfolgen, über welche auch frischer Reaktant 30 bzw. frisches Kathodenspülmedium 50 dem Kathodenraum 3 zugeführt wird. Dabei ist zu betonen, dass die in Figur 1 dargestellte Leitungsanordnung und Leitungsführung lediglich das Wirkprinzip des erfindungsgemäßen Elektrolyseverfahrens veranschaulicht, wobei zahlreiche Modifikationen an der Leitungsführung, der Anzahl und Anordnung der Leitungen, der Leitungsverbindungen, der verwendeten Armaturen, Verdichter, Heizer, Wärmeüberträger, Gebläse usw. möglich sind.

Das Anodenspülmedium 60 wird dem Anodenraum 5 über eine Zuleitung 51 zugeführt. Das Anodenspülmedium 60 wird hierbei zunächst in einem Verdichter 13' auf einen Arbeitsdruck der Elektrolysezelle 1 gebraucht. Daraufhin erfolgt eine Erwärmung des Anodenspülmediums 6 durch einen Heizer 14'.

In anderen, nicht gezeigten Ausführungsformen der vorliegenden Erfindung können Verdichter 13 und Heizer 14 bzw. Verdichter 13' und Heizer 14' auch in umgekehrter Reihenfolge vorgesehen sein. Ferner können anstelle oder zusätzlich der Heizer 14, 14' auch Wärmeüberträger zum Einsatz kommen. Vereinzelt kann auch auf Heizer, Wärmeüberträger und/oder Verdichter verzichtet werden.

Das auf Arbeitsdruck und Arbeitstemperatur der Elektrolysezelle 4 gebrachte Anodenspülmedium 60' wird über die Leitung 51 dem Anodenraum 5 zugeführt. Innerhalb des Anodenraumes 5 strömt das Anodenspülmedium 60' an der Anode 45 vorbei. Dabei nimmt die Strömung des Anodenspülmediums 60' den an der Anode 45 ausgebildeten Sauerstoff mit. Das mit Sauerstoff angereicherte Anodenspülmedium 60' wird in dem gezeigten Beispiel nach seinem Vorbeiströmen an der Anode 45 einer Abtrennvorrichtung 12 zugeleitet. Mithilfe der Abtrennvorrichtung 12 werden Sauerstoff und Anodenspülmedium 60' wenigstens teilweise voneinander getrennt. Der abgetrennte Sauerstoff wird über eine Leitung 54 nach außen abgeführt. Das sauerstoffabgereicherte Anodenspülmedium/Sauerstoff-Gemisch wird über den Anodenspülkreislauf 16 wieder dem Anodenraum 5 zugeführt.

In dem Kathodenspülkreislauf 15 und/oder in dem Anodenspülkreislauf 16 kann wenigstens ein Rezirkulationsgebläse zum Einsatz kommen, das wenigstens einen Reaktanten der Elektrolyse und/oder wenigstens ein Produktgas der Elektrolyse und/oder wenigstens ein Spülmedium der Elektrolyse vom Prozessausgang zum Prozesseingang der Elektrolysezelle 4 fördert. Zur Förderung der Rezirkulation können auch die oben beschriebenen Verdichter 13, 13' verwendet werden.

Zum Abtrennen einzelner Medien aus den bei dem erfindungsgemäßen Verfahren entstehenden Gasgemischen können bei der vorliegenden Erfindung verschiedene Vorrichtungen und/oder Verfahren genutzt werden. Beispielsweise kann die verwendete Abtrennvorrichtung wenigstens eine Abtrennmembran und/oder eine poröse Abtrennstruktur aufweisen, an die das jeweils zu trennende Gemisch geleitet wird und welche von dem jeweils abzutrennenden Medium mit einer anderen Geschwindigkeit als von dem jeweils anderen, im Gemisch enthaltenen Medium durchdrungen wird.

Ferner ist es möglich, eine Abtrennvorrichtung mit wenigstens einem Sorbens vorzusehen, an oder in das das jeweilige Gemisch geleitet wird, wobei das Sorbens das abzutrennende Medium stärker oder schlechter als das jeweils andere in dem Gemisch enthaltene Medium adsorbiert. Als Sorbens kann beispielsweise eine Abtrennflüssigkeit verwendet werden.

Zum Abtrennen der Bestandteile des in den jeweiligen Spülkreisläufen ausgebildeten Gasgemisches voneinander kann beispielsweise auch ein Druck- und/oder Wechseladsorptionsverfahren, eine kryogene Gaszerlegung und/oder eine chemische Trennung eingesetzt werden. Um die Bestandteile des jeweiligen Gemisches voneinander chemisch zu trennen, kann beispielsweise ein Verbrennen genutzt werden.

Der Druckbehälter 2 umschließt und isoliert thermisch die Elektrolysezelle 4, den Kathodenraum 3 und den Anodenraum 5 Das Innere des Behälterraumes 2 weist einen Druck nahe dem Arbeitsdruck der Elektrolysezelle 4 auf.

Der Behälterraum 2 wird über eine Leitung 21 mit einem gasförmigen Medium, wie beispielsweise Stickstoff oder einem anderen Inertgas, gefüllt. Das Gas kann über eine Leitung 22 aus dem Behälterraum 2 abgelassen werden.

Da die beispielsweise verwendeten dünnen Keramikmembranen des Elektrolyten 44 der Elektrolysezelle 4 empfindlich gegenüber Differenzdrücken im Bereich einiger 10 ... 100 mbar sind, ist eine sehr genaue Regelung der Volumenströme der zugeführten Medien zur Angleichung der Innendrücke in den verschiedenen Druckräumen des Elektrolysemoduls 1 unter Berücksichtigung des Stoffübertrittes in der Elektrolysezelle 4 notwendig.

Zusätzlich muss der Druck innerhalb des Druckbehälters 2 nahe an den Druck des Kathodenraums 3 und des Anodenraums 5 angepasst werden, um die Materialbelastung im Inneren des Behälterraumes 2 so gering wie möglich zu halten. Besonders kritisch ist hierbei die Phase des Systemstartes, wenn alle drei Druckräume 2, 3, 5 des Elektrolysemoduls 1 synchron von Umgebungsdruck auf den Arbeitsdruck der Elektrolysezelle 4 gebracht werden müssen.

Die vorliegende Erfindung enthält verschiedene Varianten, um einen solchen Druckangleich zu ermöglichen.

So sind in dem Elektrolysemodul 1 aus Figur 1 in der von dem Behälterraum 2 abgehenden Leitung 22, der von dem Kathodenraum 3 abgehenden Leitung 32 und der von dem Anodenraum 5 abgehenden Leitung 52 jeweils Ventile 23, 33, 53 vorgesehen. Von den Ventilen 23, 33, 53 kann jeweils ein beliebiges Ventil zur Regelung des Absolutdruckes des Elektrolysemoduls 1 verwendet werden, während die beiden anderen Ventile zur Regelung des Differenzdruckes zu der Leitung mit der Absolutdruckregelung eingesetzt werden können.

In den Figuren 2 bis 4 sind für eine vereinfachte Darstellung der erfindungsgemäß verwendeten Druckregelprinzipien lediglich die für die Druckregelung relevanten Bauteile und Medienleitungen gezeigt. Die in den Figuren 1 bis 4 veranschaulichten Druckregelprinzipien können gemeinsam mit oder auch unabhängig von den in Bezug zu Figur 1 erörterten Elektrodenspülungen an unterschiedlichen Arten von Elektrolysezellen angewendet werden.

**Figur 2** zeigt eine Ausführungsform des erfindungsgemäßen Elektrolyseverfahrens anhand eines schematisch dargestellten Elektrolysemoduls 1a. In dem Elektrolysemodul 1a ist eine Verbindung zwischen dem Druckbehälter 2 und dem Anodenraum 5 über eine Leitung 25 vorgesehen. Über die Leitung 25 kann durch die zu dem Anodenraum 5 führende Leitung 51 Spülmedium in das Innere des Behälterraumes 2 geleitet werden. Dadurch stellt sich in dem Behälterraum 2 der gleiche Druck wie in dem Anodenraum 5 ein, sodass die in Figur 1 verwendete Differenzdruckregelung zwischen dem Behälterraum 2 und dem Anodenraum 5 hier entfallen kann.

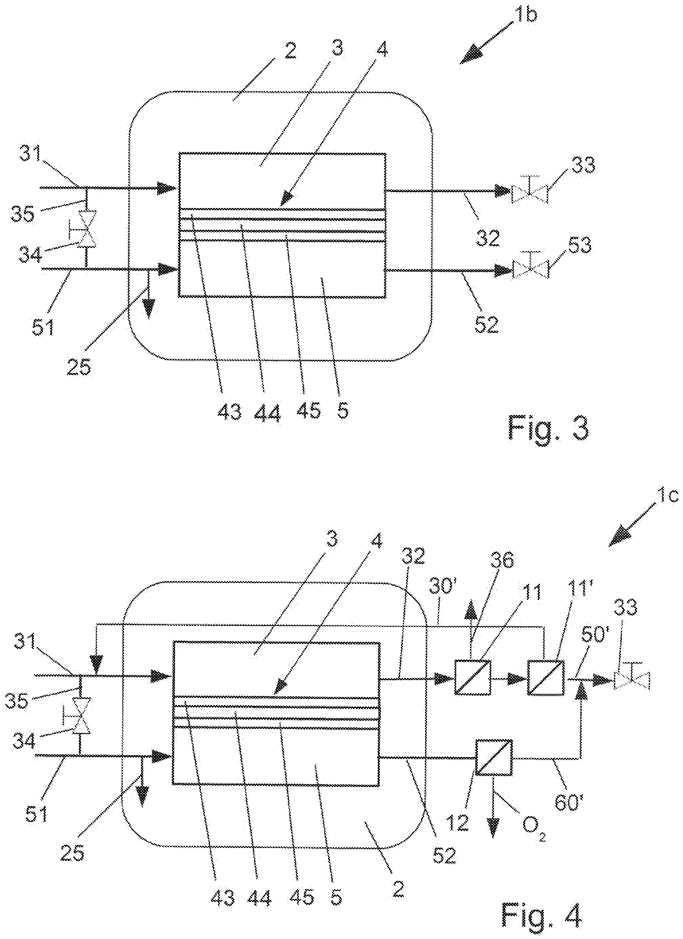

**Figur 3** zeigt eine Ausführungsform des erfindungsgemäßen Elektrolyseverfahrens anhand eines schematisch dargestellten Elektrolysemoduls 1b. In dem Elektrolysemodul 1b, in dem wie in dem Elektrolysemodul 1a der Behälterraum 2 mit dem Anodenraum 5 über eine Leitung 25 verbunden ist, wird in einem Anfahrbetrieb und/oder einem Abfahrbetrieb der Elektrolysezelle 4 eine Verbindung des Kathodenraumes 3 mit dem Anodenraum 5 hergestellt. Diese Verbindung 35 wird durch ein zwischen den Medienzuleitungen 31 und 51 vorgesehenes Ventil 34 realisiert. Somit kann in dem Anfahrbetrieb und/oder dem Abfahrbetrieb der Elektrolysezelle 4 über eine Zufuhr von Spülmedium ein Druckausgleich zwischen dem Kathodenraum 3 und dem Anodenraum 5 hergestellt werden. Auf diese Weise kann die in dem Elektrolysemodul 1 aus Figur 1 zur Anwendung kommende Differenzdruckregelung zwischen dem Kathodenraum 3 und dem Anodenraum 5 in dem Anfahrbetrieb und/oder dem Abfahrbetrieb der Elektrolysezelle 4 entfallen, und es können dennoch alle Druckräume 2, 3, 5 gleichmäßig auf ein bestimmtes Druckniveau gebracht werden. Der Absolutdruck kann in dieser Ausführungsform des erfindungsgemäßen Verfahrens über die Ventile 33 und 53 oder über nur eines der Ventile 33, 53, wobei das andere geschlossen wird, geregelt werden.

**Figur 4** zeigt eine Ausführungsform des erfindungsgemäßen Elektrolyseverfahrens anhand eines schematisch dargestellten Elektrolysemoduls 1c. Das Elektrolysemodul 1c baut auf dem Elektrolysemodul 1b aus Figur 3 auf. Am Prozessausgang sind bei dem Elektrolysemodul 1c die von dem Kathodenraum 3 abgehende Leitung 32 und die von dem Anodenraum 5 abgehende Leitung 52 verbunden. Ferner ist in der von dem Kathodenraum 3 abgehenden Leitung 32 eine Abtrennvorrichtung 11 vorgesehen, wobei in dem gezeigten Beispiel durch die Abtrennvorrichtung 11 Wasserstoff von dem an der Kathode 43 ausgebildeten Gasgemisch abgetrennt wird und wobei der abgetrennte Wasserstoff über eine Leitung 36 abgeführt wird. Durch die dauerhafte Verbindung zwischen dem Kathodenraum 3 und dem Anodenraum 5 am Prozessausgang kann die in dem Elektrolysemodul 1 aus Figur 1 angewendete Differenzdruckregelung zwischen dem Kathodenraum 3 und dem Anodenraum 5 entfallen. Es wird nur ein Absolutdruckregler benötigt, der in der Ausführungsform von Figur 4 durch das Ventil 33 am Prozessausgang realisiert wird.

Ferner kann, wie in Figur 4 veranschaulicht, nach der Abtrennvorrichtung 11 für Wasserstoff eine weitere Abtrennvorrichtung 11' folgen, in welcher der verbliebene Wasserdampf 30' ganz oder teilweise von dem Kathodenspülmedium 50' getrennt werden kann, woraufhin der abgetrennte Wasserdampf 30' an einen Prozessgaseingang der Elektrolysezelle 1c rezirkuliert werden kann. Weiterhin kann mit noch einer weiteren Abtrennvorrichtung 12 aus dem in der Leitung 52 befindlichen Gasgemisch Sauerstoff von dem Anodenspülmedium 60' abgetrennt werden. Die Verbindung der beiden Stränge 52 und 32 nach den jeweiligen Abtrennvorrichtungen 11, 11', 12 enthält im Wesentlichen die Spülmedien 50', 60'. Wird nur auf der Anodenseite oder nur auf der Kathodenseite des Elektrolysemoduls 1, 1a, 1b, 1c ein Spülmedium verwendet oder wird auf beiden Seiten das gleiche Spülmedium verwendet, kann dieses ebenfalls rezirkuliert werden.

### Bezugszeichenliste

- 1, 1a, 1b, 1c: Elektrolysemodul
- 2: Behälterraum
- 3: Kathodenraum
- 4: Elektrolysezelle
- 5: Anodenraum
- 6: Anodenspülmedium
- 11, 11': Abtrennvorrichtung
- 12: Abtrennvorrichtung
- 13, 13': Verdichter
- 14, 14': Heizer/Wärmeüberträger
- 15: Kathodenspülkreislauf
- 16: Anodenspülkreislauf
- 21: Leitung
- 22: Leitung
- 23: Druckregelungseinheit
- 25: Leitung
- 30, 30': Reaktant
- 31: Medienzuleitung
- 32: Leitung
- 33: Druckregelungseinheit
- 34: Druckregelungseinheit
- 36: Leitung
- 43: Kathode
- 44: Elektrolyt
- 45: Anode
- 50, 50': zweites Spülmedium
- 51: Medienzuleitung
- 52: Leitung
- 53: Druckregelungseinheit
- 54: Leitung
- 60, 60': erstes Spülmedium
- CO: Kohlendioxid
- H₂, CO: Produktgas
- H₂/CO-30: Produktgas-Reaktantengemisch
- H₂: Wasserstoff
- H₂O: Wasser
- N₂: Stickstoff
- O₂: Sauerstoff
- rSOC: reversible Festoxidzelle
- SOEC: Festoxidelektrolysezelle
- SOC: Festoxidzelle
- 50-H₂/CO: Spülmedium-Produktgasgemisch
- 60-O₂: Spülmedium-Sauerstoffgemisch

## Patentansprüche

1. Elektrolyseverfahren mit einer Elektrolysezelle (4), betrieben in einem Temperaturbereich von 300 °C bis 1.500 °C oder von 600 °C bis 1.000 °C, umfassend die Schritte:
- Zuführen eines Reaktanten (30) zur Elektrolysezelle (4),
wobei sich an der Kathode (43) der Elektrolysezelle (4) ein Produktgas und an der Anode (45) der Elektrolysezelle (4) Sauerstoff (O₂) bildet,
- wenigstens teilweises Abtransportieren des Sauerstoffs (O₂) mittels wenigstens eines der Elektrolysezelle (4) zuzuführenden ersten Spülmediums (60), wobei das wenigstens erste Spülmedium (60) inert gegenüber dem Sauerstoff (O₂) ist,
- wenigstens teilweises Trennen des Spülmedium-Sauerstoffgemisches (60-O₂) in einer Abtrennvorrichtung (12) in die Bestandteile Sauerstoff (O₂) und wenigstens das erste Spülmedium (60),
- Rezirkulieren durch erneutes Zuführen des abgetrennten wenigstens ersten Spülmediums (60) in die Elektrolysezelle (4) und Herausleiten des abgetrennten Sauerstoffs (O₂) aus dem Verfahren,
**dadurch gekennzeichnet, dass**
das Verfahren auf einer Festoxidelektrolysezelle (SOEC), einer Festoxidzelle (SOC), oder eine reversible Festoxidzelle (rSOC) als Elektrolysezelle (4) gefahren wird
und
zum Spülen als das wenigstens erste Spülmedium ein Inertgas oder ein Edelgas bei Arbeitstemperatur und Arbeitsdruck der Elektrolyse verwendet wird, wobei dies in einem geschlossenen Anodenkreislauf geleitet wird,
wobei das wenigstens teilweise Trennen des Sauerstoffs (O₂) vom ersten Spülmedium mit wenigstens einer Abtrennmembran und/oder einer porösen Abtrennstruktur und/oder einem Sorbens und/oder Druck- und/oder Temperaturwechseladsorptionsanordnung erfolgt.

2. Elektrolyseverfahren nach Anspruch 1,
**dadurch gekennzeichnet, dass**
ein wenigstens teilweises Abtransportieren des Produktgases durch Spülen mittels wenigstens eines zweiten Spülmediums (50) erfolgt und das Spülmedium-Produktgasgemisch (50-H₂/CO) in einer Abtrennvorrichtung (11) in die Bestandteile Produktgas und wenigstens das zweite Spülmedium (50) aufgetrennt wird, wobei ein Rezirkulieren des abgetrennten wenigstens zweiten Spülmediums (50) oder Spülmedium-Produktgasgemisch (50-H₂/CO) oder des Produktgases durch erneutes Zuführen in die Elektrolysezelle (4) und ein wenigstens teilweises Herausleiten des abgetrennten Produktgases aus dem Verfahren erfolgt, wobei das wenigstens zweite Spülmedium (50) inert gegenüber dem Produktgas ist.

3. Elektrolyseverfahren nach Anspruch 1 oder 2,
**dadurch gekennzeichnet, dass**
das Elektrolyseverfahren derart gefahren wird, dass weniger als 100 % des Reaktanten (30) in Produktgas umgesetzt werden, so dass ein wenigstens teilweises Abtransportieren des Produktgases durch den nicht umgesetzten Reaktanten (30) erfolgt, wobei das Produktgas-Reaktantengemisch (H₂/CO-30) in einer Abtrennvorrichtung (11) in die Bestandteile Produktgas und Reaktant (30) wenigstens teilweise aufgetrennt wird, wobei ein Rezirkulieren des abgetrennten Reaktanten (30) oder Produktgas-Reaktantengemisch (H₂/CO-30) und ein wenigstens teilweises Herausleiten des abgetrennten Produktgases aus dem Verfahren erfolgt.

4. Elektrolyseverfahren nach einem der vorangehenden Ansprüche,
**dadurch gekennzeichnet, dass**
als Reaktant (30) Wasser (H₂O) und/oder Kohlendioxid (CO₂) als Gas, Dampf und/oder gasartiger Dampf verwendet wird, wobei als Produktgase entsprechend der verwendeten Reaktanten (30) Wasserstoff (H₂) und/oder Kohlenstoffmonoxid (CO) gebildet werden.

5. Elektrolyseverfahren nach einem der vorangehenden Ansprüche,
**dadurch gekennzeichnet, dass**
vor dem erneuten Einbringen in den Kathodenspülkreislauf (15) / Anodenspülkreislauf (16) ein Erhitzen und/oder Verdichten des wenigstens ersten (60) / zweiten Spülmediums (50) erfolgt.

6. Elektrolyseanordnung umfassend eine Elektrolysezelle (4), wobei die Elektrolysezelle eine Festoxidelektrolysezelle (SOEC), eine Festoxidzelle (SOC) oder eine reversible Festoxidzelle (rSOC) ist,
**dadurch gekennzeichnet, dass**
die Elektrolyseanordnung wenigstens drei voneinander separate Druckräume, nämlich einen Anodenraum (5), einen Kathodenraum (3), die zusammen die Elektrolysezelle (4) bilden, und einen Behälterraum (2) aufweist, wobei
- der Anodenraum (5) und der Kathodenraum (3) innerhalb des Behälterraumes (2) angeordnet sind;
- zur Zuführung eines Reaktanten (30) in den Kathodenraum (3) und zur Zuführung wenigstens eines ersten Spülmediums (60), wobei das wenigstens erste Spülmedium (60) inert gegenüber dem Sauerstoff (O₂) ist, in den Anodenraum (5) jeweils wenigstens eine Medienzuleitung (31, 51) vorgesehen ist;
- zur Abführung wenigstens des ersten Spülmediums (60) und des sich durch die Elektrolyse bildenden Sauerstoffs (O₂) aus dem Anodenraum (5) und zur Abführung eines sich durch die Elektrolyse bildenden Produktgases aus dem Kathodenraum (3) jeweils wenigstens eine abgehende Leitung (32, 52) vorgesehen ist;
- entweder der Anodenraum (5) oder der Kathodenraum (3) mit dem Behälterraum (2) verbunden ist, so dass ein Gasfluss zwischen den beiden verbundenen Räumen (5-2/3-2) möglich ist
und
- wenigstens ein Spülkreislauf (16) vorgesehen ist, so dass wenigstens der Anodenraum (5) mit dem ersten Spülmedium (60) spülbar ist,
wobei
der Anodenraum (5), der Kathodenraum (3) und der Behälterraum (2) jeweils als separate Druckräume, also als Räume, in welchen der Innendruck des jeweiligen Raumes (2, 3, 5) separat von dem Innendruck der anderen Räume (5, 3, 2) ausbildbar oder einstellbar ist, ausgebildet sind
und
stromabwärts nach der Elektrolysezelle (4) in dem wenigstens einem Spülkreislauf (16) eine Abtrennvorrichtung (11, 12) zum Abtrennen des wenigstens ersten Spülmediums (60) / Sauerstoffs (O₂) vorgesehen ist, wobei das wenigstens erste Spülmedium (60) über den wenigstens einen Spülkreislauf (15, 16) rezirkulierbar ist und der Sauerstoff (O₂) über eine Leitung (54) aus dem Elektrolysesystem abführbar ist
und
die wenigstens eine Abtrennvorrichtung (11, 12) mit wenigstens einer Abtrennmembran und/oder einer porösen Abtrennstruktur und/oder einem Sorbens und/oder Druck- und/oder Temperaturwechseladsorptionsanordnung ausgebildet ist.

7. Elektrolyseanordnung nach Anspruch 6,
**dadurch gekennzeichnet, dass**
innerhalb des Behälterraumes (2) mehrere Elektrolysezellen (4) mit Anodenräumen (5) und Kathodenräumen (3) angeordnet sind, wobei die Kathodenräume (3) miteinander verbunden und die Anodenräume (5) miteinander verbunden sind, so dass mehrere Kathodenräume (3) einen gemeinsamen Kathodenraum bilden und mehrere Anodenräume (5) einen gemeinsamen Anodenraum bilden.

8. Elektrolyseanordnung nach Anspruch 6 oder 7,
**dadurch gekennzeichnet, dass**
zur Gaszuführung in den Anodenraum (5) und/oder den Kathodenraum (3) Druckregelungseinheiten (23, 33, 34, 53) vorgesehen sind, durch die der jeweilige Druck in den Druckräumen (2, 3, 5) einstellbar ist.

9. Elektrolyseanordnung nach einem der Ansprüche 6 bis 8,
**dadurch gekennzeichnet, dass**
zwei Spülkreisläufe (15, 16) vorgesehen sind, so dass
der Anodenraum (5) mit einem ersten Spülmedium (60) und der Kathodenraum (3) mit einem zweiten Spülmedium (50) und/oder dem Reaktanten (30) spülbar ist.

10. Elektrolyseanordnung nach einem der Ansprüche 6 bis 9,
**dadurch gekennzeichnet, dass**
zur Rezirkulation mittels des wenigstens einen Spülkreislaufes (15, 16) ein Rezirkulationsgebläse und/oder eine Strahlpumpe und/oder Heizer/Wärmeüberträger (14, 14') vorgesehen ist.

11. Elektrolyseanordnung nach einem der Ansprüche 6 bis 10,
**dadurch gekennzeichnet, dass**
während des An- und/oder Abfahrbetriebes der Elektrolysezelle (4) eine temporäre Verbindung (35) zwischen dem Anodenraum (5) und dem Kathodenraum (3) vorgesehen und schaltbar ist, so dass ein Gasfluss zwischen den beiden verbundenen Räumen (3/5) während des An- und/oder Abfahrbetriebes möglich ist.

12. Elektrolyseanordnung nach einem der Ansprüche 6 bis 11,
**dadurch gekennzeichnet, dass**
eine Kühlanordnung zum Abkühlen des/der der Abtrennvorrichtung (11, 12) zugeführten Medien (30, 50, 60) vorgesehen ist, wobei die dort entziehbare Wärme rekuperativ zur Erwärmung des/der zuzuführenden Medien nutzbar ist.

13. Elektrolyseanordnung nach einem der Ansprüche 6 bis 12,
**dadurch gekennzeichnet, dass**
- die Medienzuleitunge(n) (51) und/oder abgehende(n) Leitung(en) (52) für die Anode bei Verbindung des Anodenraums (5) mit dem Behälterraum (2)
oder
- die Medienzuleitunge(n) (31) und/oder abgehende(n) Leitung(en) (32) für die Kathode bei Verbindung des Kathodenraums (3) mit dem Behälterraum (2)
jeweils im Behälterraum (2) enden.

14. Elektrolyseanordnung nach einem der Ansprüche 6 bis 13,
**dadurch gekennzeichnet, dass**
das erste (60) und zweite Spülmedium (50) identisch sind, wobei bevorzugt Stickstoff (N₂) das erste (60) und zweite Spülmedium (50) ist.

## Claims

1. Electrolysis method using an electrolysis cell (4), operated in a temperature range from 300°C to 1500°C or from 600°C to 1000°C, comprising the steps:
- feeding a reactant (30) to the electrolysis cell (4), wherein a product gas forms at the cathode (43) of the electrolysis cell (4) and oxygen (O₂) forms at the anode (45) of the electrolysis cell (4),
- at least partially transporting away the oxygen (O₂) by means of at least a first flushing medium (60) that is to be fed to the electrolysis cell (4), wherein the at least first flushing medium (60) is inert with respect to the oxygen (O₂),
- at least partially separating the flushing medium/oxygen mixture (60-O₂) in a separating device (12) into the constituents oxygen (O₂) and at least the first flushing medium (60),
- recirculating by feeding the separated at least first flushing medium (60) back into the electrolysis cell (4) and conducting the separated oxygen (O₂) out of the method,
**characterized in that**
the method is carried out on a solid oxide electrolysis cell (SOEC), a solid oxide cell (SOC) or a reversible solid oxide cell (rSOC) as the electrolysis cell (4),
and
an inert gas or a noble gas at the working temperature and working pressure of the electrolysis is used for flushing as the at least first flushing medium, this being conducted in a closed anode circuit,
wherein the at least partial separation of the oxygen (O₂) from the first flushing medium takes place using at least a separation membrane and/or a porous separation structure and/or a sorbent and/or a pressure-swing and/or temperature-swing adsorption assembly.

2. Electrolysis method according to claim 1,
**characterized in that**
the product gas is at least partially transported away by flushing by means of at least a second flushing medium (50), and the flushing medium/product gas mixture (50-H₂/CO) is separated in a separating device (11) into the constituents product gas and at least the second flushing medium (50), wherein the separated at least second flushing medium (50) or the flushing medium/product gas mixture (50-H₂/CO) or the product gas is recirculated by being fed back into the electrolysis cell (4) and the separated product gas is at least partially conducted out of the method, wherein the at least second flushing medium (50) is inert with respect to the product gas.

3. Electrolysis method according to claim 1 or 2,
**characterized in that**
the electrolysis method is carried out in such a way that less than 100% of the reactant (30) is converted into product gas, so that the product gas is at least partially transported away by the unreacted reactant (30), wherein the product gas/reactant mixture (H₂/CO-30) is at least partially separated in a separating device (11) into the constituents product gas and reactant (30), wherein the separated reactant (30) or the product gas/reactant mixture (H₂/CO-30) is recirculated and the separated product gas is at least partially conducted out of the method.

4. Electrolysis method according to any one of the preceding claims,
**characterized in that**
the reactant (30) used is water (H₂O) and/or carbon dioxide (CO₂) in gas, vapour and/or gaseous vapour form, wherein the product gases formed are hydrogen (H₂) and/or carbon monoxide (CO), depending on the reactants (30) used.

5. Electrolysis method according to any one of the preceding claims,
**characterized in that**
the at least first (60)/second flushing medium (50) is heated and/or compressed before being reintroduced into the cathode flushing circuit (15)/anode flushing circuit (16).

6. Electrolysis assembly, having a electrolysis cell (4), wherein the electrolysis cell (4) is a solid oxide electrolysis cell (SOEC), a solid oxide cell (SOC) or a reversible solid oxide cell (rSOC),
**characterized in that**
the electrolysis assembly has at least three pressure chambers which are separate from one another, namely an anode chamber (5), a cathode chamber (3), which together form the electrolysis cell (4), and a container chamber (2), wherein
- the anode chamber (5) and the cathode chamber (3) are arranged inside the container chamber (2);
- in each case at least one media feed line (31, 51) is provided for feeding a reactant (30) into the cathode chamber (3) and for feeding at least a first flushing medium (60) into the anode chamber (5), wherein the at least first flushing medium (60) is inert with respect to the oxygen (O₂) ;
- in each case at least one outgoing line (32, 52) is provided for removing from the anode chamber (5) at least the first flushing medium (60) and the oxygen (O₂) that forms as a result of the electrolysis and for removing from the cathode chamber (3) a product gas that forms as a result of the electrolysis;
- either the anode chamber (5) or the cathode chamber (3) is connected to the container chamber (2) such that a flow of gas between the two connected chambers (5-2/3-2) is possible,
and
- at least one flushing circuit (16) is provided such that at least the anode chamber (5) can be flushed with the first flushing medium (60),
wherein
the anode chamber (5), the cathode chamber (3) and the container chamber (2) are arranged each as separate pressure chambers, that is to say as chambers in which the internal pressure of the respective chamber (2, 3, 5) can be created or adjusted separately from the internal pressure of the other chambers (5, 3, 2),
and
a separating device (11, 12) for separating the at least first flushing medium (60)/oxygen (O₂) is provided downstream of the electrolysis cell (4) in the at least one flushing circuit (16), wherein the at least first flushing medium (60) can be recirculated via the at least one flushing circuit (15, 16) and the oxygen (O₂) can be removed from the electrolysis system via a line (54),
and
the at least one separating device (11, 12) is formed by at least a separation membrane and/or a porous separation structure and/or a sorbent and/or a pressure-swing and/or temperature-swing adsorption assembly.

7. Electrolysis assembly according to claim 6,
**characterized in that**
a plurality of electrolysis cells (4) having anode chambers (5) and cathode chambers (3) are arranged inside the container chamber (2), wherein the cathode chambers (3) are connected to one other and the anode chambers (5) are connected to one other such that a plurality of cathode chambers (3) form a common cathode chamber and a plurality of anode chambers (5) form a common anode chamber.

8. Electrolysis assembly according to claim 6 or 7,
**characterized in that**
pressure control units (23, 33, 34, 53) are provided for feeding gas into the anode chamber (5) and/or the cathode chamber (3), by means of which the respective pressure in the pressure chambers (2, 3, 5) can be adjusted.

9. Electrolysis assembly according to any one of claims 6 to 8,
**characterized in that**
two flushing circuits (15, 16) are provided such that the anode chamber (5) can be flushed with a first flushing medium (60) and the cathode chamber (3) can be flushed with a second flushing medium (50) and/or with the reactant (30).

10. Electrolysis assembly according to any one of claims 6 to 9,
**characterized in that**
a recirculation blower and/or a jet pump and/or a heater/heat exchanger (14, 14') is provided for the recirculation by means of the at least one flushing circuit (15, 16).

11. Electrolysis assembly according to any one of claims 6 to 10,
**characterized in that**
a temporary connection (35) between the anode chamber (5) and the cathode chamber (3) is provided and can be connected during start-up and/or shutdown of the electrolysis cell (4) such that that a flow of gas between the two connected chambers (3/5) is possible during start-up and/or shutdown.

12. Electrolysis assembly according to any one of claims 6 to 11,
**characterized in that**
a cooling assembly is provided for cooling the medium/media (30, 50, 60) fed to the separating device (11, 12), wherein the heat that can be drawn off there can be used recuperatively to heat the medium/media to be fed in.

13. Electrolysis assembly according to any one of claims 6 to 12,
**characterized in that**
- the media feed line(s) (51) and/or outgoing line(s) (52) for the anode when the anode chamber (5) is connected to the container chamber (2)
or
- the media feed line(s) (31) and/or outgoing line(s) (32) for the cathode when the cathode chamber (3) is connected to the container chamber (2)
in each case terminate in the container chamber (2).

14. Electrolysis assembly according to any one of claims 6 to 13,
**characterized in that**
the first (60) and second flushing medium (50) are identical, wherein preferably nitrogen (N₂) is the first (60) and second flushing medium (50).

## Revendications

1. Procédé d'électrolyse utilisant une cellule électrolytique (4), fonctionnant dans une plage de température comprise entre 300 °C et 1 500 °C ou entre 600 °C et 1000 °C, comprenant les étapes consistant à :
- introduire un réactif (30) dans la cellule d'électrolyse (4), un produit gazeux étant formé à la cathode (43) de la cellule d'électrolyse (4) et de l'oxygène (O₂) étant formé à l'anode (45) de la cellule d'électrolyse (4),
- éliminer au moins partiellement l'oxygène (O₂) au moyen d'au moins un premier fluide de rinçage (60) à introduire dans la cellule d'électrolyse (4), le au moins premier fluide de rinçage (60) étant inerte par rapport à l'oxygène (O₂),
- séparer au moins partiellement le mélange fluide de rinçage - oxygène (60-O₂) dans un dispositif de séparation (12) en les constituant oxygène (O₂) et au moins le premier fluide de rinçage (60),
- procéder à une recirculation en introduisant à nouveau dans la cellule d'électrolyse (4) le premier fluide de rinçage (60) séparé et évacuer l'oxygène séparé (O₂) du processus,
**caractérisé en ce que**
le procédé est réalisé sur une cellule d'électrolyse à oxyde solide (SOEC), une cellule à oxyde solide (SOC) ou une cellule à oxyde solide réversible (rSOC) en tant que cellule d'électrolyse (4) et
pour le rinçage, un gaz inerte ou un gaz noble est utilisé comme au moins premier fluide de rinçage à la température de travail et à la pression de travail de l'électrolyse, celui-ci étant conduit dans un circuit anodique fermé,
la séparation au moins partielle de l'oxygène (O₂) hors du premier fluide de rinçage étant réalisée avec au moins une membrane de séparation et/ou une structure de séparation poreuse et/ou un sorbant et/ou un dispositif d'adsorption des variations de pression et/ou de température.

2. Procédé d'électrolyse selon la revendication 1, **caractérisé en ce qu'**une élimination au moins partielle du produit gazeux est réalisée par rinçage au moyen d'au moins un deuxième fluide de rinçage (50), et le mélange fluide de rinçage - produit gazeux (50-H₂/CO) est séparé dans un dispositif de séparation (11) en les constituants produit gazeux et au moins le deuxième fluide de rinçage (50), une recirculation du au moins deuxième fluide de rinçage (50) séparé ou du mélange fluide de rinçage - produit gazeux (50-H₂/CO) ou du produit gazeux étant réalisée par réintroduction dans la cellule d'électrolyse (4), et une évacuation au moins partielle du produit gazeux séparé hors du processus étant réalisée, le au moins deuxième fluide de rinçage (50) étant inerte par rapport au produit gazeux.

3. Procédé d'électrolyse selon la revendication 1 ou 2, **caractérisé en ce que** le procédé d'électrolyse est exécuté de telle sorte que moins de 100 % du réactif (30) est converti en produit gazeux, de sorte qu'une élimination au moins partielle du produit gazeux est réalisée par le réactif (30) n'ayant pas réagi, le mélange produit gazeux - réactif (H₂/CO-30) étant au moins partiellement séparé dans un dispositif de séparation (11) en les composants produit gazeux et réactif (30), une recirculation du réactif (30) séparé ou du mélange produit gazeux - réactifs (H₂/CO-30) étant réalisée, et une évacuation au moins partielle du produit gazeux séparé hors du processus étant réalisée.

4. Procédé d'électrolyse selon l'une des revendications précédentes, **caractérisé en ce que** de l'eau (H₂O) et/ou du dioxyde de carbone (CO₂) est utilisé comme réactif (30), et de la vapeur et/ou de la vapeur saturée est utilisée comme gaz, de l'hydrogène (H₂) et/ou du monoxyde de carbone (CO) étant formé comme produit gazeux selon les réactifs (30) utilisés.

5. Procédé d'électrolyse selon l'une des revendications précédentes, **caractérisé en ce qu'**avant d'être réintroduit dans le circuit de rinçage cathodique (15) / le circuit de rinçage anodique (16), le au moins premier (60) / deuxième (50) fluide de rinçage est chauffé et/ou comprimé.

6. Arrangement d'électrolyse comprenant une cellule d'électrolyse (4), la cellule d'électrolyse étant une cellule d'électrolyse à oxyde solide (SOEC), une cellule à oxyde solide (SOC) ou une cellule à oxyde solide réversible (rSOC), **caractérisé en ce que** l'arrangement d'électrolyse comprend au moins trois chambres de pression séparées les unes des autres, à savoir une chambre anodique (5), une chambre cathodique (3), qui forment ensemble la cellule d'électrolyse (4), et une chambre de récipient (2),
- la chambre anodique (5) et la chambre cathodique (3) étant disposées dans la chambre de récipient (2) ;
- au moins une conduite d'alimentation en fluide (31, 51) étant prévue dans la chambre anodique (5) et dans la chambre cathodique (3) pour l'introduction d'un réactif (30) dans la chambre cathodique (3) et pour l'introduction d'au moins un premier fluide de rinçage (60) dans la chambre anodique (5), le au moins premier fluide de rinçage (60) étant inerte par rapport à l'oxygène (O₂) ;
- au moins une conduite de sortie (32, 52) étant prévue dans la chambre anodique (5) et dans la chambre cathodique (3) pour évacuer de la chambre anodique (5) au moins le premier fluide de rinçage (60) et l'oxygène (O₂) formé par l'électrolyse et pour évacuer de la chambre cathodique (3) un produit gazeux formé par l'électrolyse ;
- soit la chambre anodique (5) soit la chambre cathodique (3) étant reliée à la chambre de récipient (2) de sorte qu'un flux de gaz entre les deux chambres reliées (5-2/3-2) est possible et
- au moins un circuit de rinçage (16) étant prévu, de sorte qu'au moins la chambre anodique (5) peut être rincée avec le premier fluide de rinçage (60),
la chambre anodique (5), la chambre cathodique (3) et la chambre de réservoir (2) étant chacune conçues comme des chambres de pression séparées, c'est-à-dire comme des chambres dans lesquelles la pression interne de la chambre considérée (2, 3, 5) peut être établie ou réglée séparément de la pression interne des autres chambres (5, 3, 2), et
un dispositif de séparation (11, 12) étant prévu en aval de la cellule d'électrolyse (4), dans le au moins un circuit de rinçage (16), pour séparer le au moins premier fluide de rinçage (60) / l'oxygène (O₂), le au moins premier fluide de rinçage (60) pouvant être mis en recirculation par le au moins un circuit de rinçage (15, 16) et l'oxygène (O₂) pouvant être évacué du système d'électrolyse par une conduite (54) et
le au moins un dispositif de séparation (11, 12) étant conçu avec au moins une membrane de séparation et/ou une structure de séparation poreuse et/ou un sorbant et/ou un dispositif d'adsorption des variations de pression et/ou de température.

7. Arrangement d'électrolyse selon la revendication 6,
**caractérisé en ce que**
plusieurs cellules d'électrolyse (4) avec des chambres anodiques (5) et des chambres cathodiques (3) sont disposées à l'intérieur de la chambre de récipient (2), les chambres cathodiques (3) étant reliées entre elles et les chambres anodiques (5) étant reliées entre elles, de sorte que plusieurs chambres cathodiques (3) forment une chambre cathodique commune et plusieurs chambres anodiques (5) forment une chambre anodique commune.

8. Arrangement d'électrolyse selon la revendication 6 ou 7, **caractérisé en ce que** pour l'alimentation en gaz de la chambre anodique (5) et/ou de la chambre cathodique (3), des unités de régulation de pression (23, 33, 34, 53) sont prévues au moyen desquelles peut être réglée la pression respective dans les chambres de pression (2, 3, 5).

9. Arrangement d'électrolyse selon l'une des revendications 6 à 8,
**caractérisé en ce que**
deux circuits de rinçage (15, 16) sont prévus de sorte que la chambre anodique (5) peut être rincée avec un premier fluide de rinçage (60) et la chambre cathodique (3) avec un deuxième fluide de rinçage (50) et/ou avec le réactif (30).

10. Arrangement d'électrolyse selon l'une des revendications 6 à 9,
**caractérisée en ce qu'**
un ventilateur de recirculation et/ou une pompe à jet et/ou un dispositif de chauffage/échangeur de chaleur (14, 14') est prévu pour la recirculation au moyen du au moins un circuit de rinçage (15, 16).

11. Arrangement d'électrolyse selon l'une des revendications 6 à 10,
**caractérisé en ce que**
pendant la procédure de démarrage et/ou d'arrêt de la cellule d'électrolyse (4), il est prévu une liaison temporaire (35) entre la chambre anodique (5) et la chambre cathodique (3) qui peut être commutée, de sorte qu'un flux de gaz entre les deux chambres (3/5) reliées est possible pendant la procédure de démarrage et/ou d'arrêt.

12. Arrangement d'électrolyse selon l'une des revendications 6 à 11,
**caractérisé en ce qu'**
il est prévu un dispositif de refroidissement pour refroidir le ou les fluides (30, 50, 60) amenés au dispositif de séparation (11, 12), la chaleur qui peut y être extraite étant utilisable par récupération pour chauffer le ou les fluides à amener.

13. Arrangement d'électrolyse selon l'une des revendications 6 à 12, **caractérisé en ce que**
- la (les) conduite(s) d'alimentation en fluide (51) et/ou la (les) conduite(s) de sortie (52) pour l'anode en cas de liaison de la chambre anodique (5) avec la chambre de récipient (2), ou
- la (les) conduite(s) d'alimentation en fluide (31) et/ou la (les) conduite(s) de sortie (32) pour la cathode en cas de liaison de la chambre cathodique (3) avec la chambre de récipient (2)
se termine chacune(s) dans la chambre de récipient (2).

14. Arrangement d'électrolyse selon l'une des revendications 6 à 13, **caractérisée en ce que** le premier (60) et le deuxième (50) fluide de rinçage sont identiques, le premier (60) et le deuxième (50) fluide de rinçage étant de préférence de l'azote (N₂).
